(19) Europäisches Patentamt
European Patent Office
Office européen des brevets

(11) EP 3 798 279 B1

(12) EUROPEAN PATENT SPECIFICATION

(45) Date of publication and mention of the grant of the patent:
**29.01.2025 Bulletin 2025/05**

(21) Application number: **20198984.5**

(22) Date of filing: **29.09.2020**

(51) International Patent Classification (IPC):
***C09J 7/10*** *(2018.01)* ***C09J 7/29*** *(2018.01)*
***C09J 7/38*** *(2018.01)* ***C09J 7/40*** *(2018.01)*
***C09J 133/08*** *(2006.01)*

(52) Cooperative Patent Classification (CPC):
**C09J 7/38; C09J 7/403; C09J 133/08;**
C09J 2203/318; C09J 2301/312; C09J 2301/416;
C09J 2433/00; C09J 2483/005

(54) **LAMINATE SHEET**

LAMINATFOLIE

FEUILLE STRATIFIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2019 JP 2019180003**

(43) Date of publication of application:
**31.03.2021 Bulletin 2021/13**

(73) Proprietor: **Nitto Denko Corporation**
**Ibaraki-shi, Osaka 567-8680 (JP)**

(72) Inventors:
- **SUZUKI, Tatsuya**
  **Ibaraki-shi,, Osaka 567-8680 (JP)**
- **NAKAYAMA, Junichi**
  **Ibaraki-shi,, Osaka 567-8680 (JP)**

(74) Representative: **Müller-Boré & Partner Patentanwälte PartG mbB**
**Friedenheimer Brücke 21**
**80639 München (DE)**

(56) References cited:
**EP-A1- 2 100 933**
**EP-A1- 3 517 588**
**EP-A1- 3 521 395**
**US-A1- 2019 144 716**

- **DATABASE WPI Week 201467, 2 October 2014 Derwent World Patents Index; AN 2014-S06472, XP002802108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 798 279 B1

## Description

The present invention relates to a laminate sheet.

In general, pressure-sensitive adhesive (PSA) exists as a soft solid (a viscoelastic material) in a room temperature range and has a property to adhere easily to an adherend with some pressure applied. For such a property, PSA has been widely used in various industrial fields from home appliances to automobiles, OAequipment, and so on, typically in a form of a PSA sheet comprising a layer of the PSA. Technical documents related to PSA sheets include Japanese Patent No. 6300788.

From the standpoint of the productivity, handleability, convenience of storage and transportation, etc., it is desirable to obtain a PSA sheet in a wound form as a roll. Prior to use (i.e. before applied to an adherend), the PSA sheet can be processed, stored, distributed and so on as a laminate sheet in which a release liner is laminated to protect the adhesive face(s) of the PSA sheet; and therefore, it is also desirable to obtain the laminate sheet as a roll.

Patent Document 1 relates to an adhesively double-faced PSA sheet (i.e. a PSA sheet that is adhesive on both sides) that is wound in a roll for storage; and with respect to the release film adhered to the first and second faces of the PSA layer, it suggests the use of film that has a highly smooth surface on the side opposite from the side touching (facing) the PSA layer, in order to prevent formation of small contours (open pores) on the surface of the PSA layer.
Moreover, EP 2 100 933 A1 describes a double-sided pressure-sensitive adhesive sheet and a method for fixing a plastic film.

However, the recent trend towards the sort of high-resolution images in display equipment tends to demand a higher level of optical homogeneity from the PSA layer. When the sole focus is on prevention of open pore formation on the PSA layer surface, the demand would not be sufficiently fulfilled.

An objective of this invention is thus to provide a laminate sheet that includes a PSA layer, with the PSA layer having excellent optical homogeneity.

The present description provides a laminate sheet comprising a PSA layer as well as first and second films laminated on first and second faces of the PSA layer. The first film is a release film having a face A in contact with the PSA layer, with the face A being a release face. In the first film, the face A has a maximum protrusion height $Rp_{1A}$ of less than 50 nm. In the laminate sheet, the first and second films have a combined thickness $T_{SUM}$ of 80 $\mu$m or greater. The thickness of the PSA layer is 20 $\mu$m or greater and 200 $\mu$m or less.

Because the PSA layer's first face (or the "first adhesive face" hereinafter) is in contact with the release face with $Rp_{1A}$ < 50 nm, the laminate sheet in such an embodiment can achieve a high level of smoothness on the first adhesive face. In addition, because the first and second films have a combined thickness $T_{SUM}$ of 80 $\mu$m or greater, the occurrence of optical distortion in the PSA layer can be favorably reduced. The high smoothness and reduced optical distortion of the first adhesive face can bring about a laminate sheet having a PSA layer with excellent optical homogeneity.

As used herein, the adhesive face refers to the surface of the PSA layer on which the release film is laminated in the laminate sheet, that is, the surface potentially applied to an adherend upon removal of the release film.

The laminate sheet disclosed herein can be preferably made in an embodiment having a PSA layer formed from a photocurable PSA composition as the PSA layer. The photocurable PSA composition is suited for forming a PSA layer with high surface smoothness. In the embodiment using a photocurable PSA composition to form the PSA layer, it is particularly effective to employ the embodiment that satisfies the $T_{SUM}$ to reduce the occurrence of optical distortion.

In some embodiments, between the first and second films, at least one preferably satisfies the next formula 0.10 (N•mm) < $E' \times T^3$ with respect to the relationship between thickness T (mm) and elastic modulus E' (MPa). According to the laminate sheet in such an embodiment, the occurrence of optical distortion can be effectively reduced in the PSA layer.

In some embodiments of the laminate sheet disclosed herein, in the laminate sheet, the face A of the first film may have a shear peel strength $Fs_1$ of 0.5 N/4cm$^2$ or greater and 250 N/4cm$^2$ or less relative to the first face of the PSA layer. According to the laminate sheet having a shear peel strength $Fs_1$ in this range, the effect to reduce the occurrence of optical distortion of the PSA layer can be favorably obtained.

In some embodiments of the laminate sheet disclosed herein, the second film is a release film having a face A in contact with the PSA layer, with the face Abeing a release face. In the laminate in such an embodiment, the first and second films are releasably laminated on the first and second faces of the PSA layer, respectively. Thus, the PSA layer can be thought as an adhesively double-faced PSA sheet wherein the first and second faces are both adhesive faces. In the second film, the face A in contact with the PSA layer preferably has a maximum protrusion height $Rp_{2A}$ of less than 50 nm. Because the PSA layer's second face (second adhesive face) is in contact with the release face with $Rp_{2A}$ < 50 nm, the laminate sheet in such an embodiment can achieve a high level of smoothness on the second adhesive face.

As the PSA for forming the PSA layer, an acrylic PSA can be preferably used. The acrylic PSA is likely to form a highly transparent PSA layer. The highly transparent PSA layer can be an advantageous feature, for instance, in optical applications.

Because of the reduce optical distortion in the PSA layer and the likelihood of obtaining a highly smooth adhesive face, the laminate sheet disclosed herein can be preferably used for producing an optical member having the PSA layer.

The PSA-layer-bearing optical member (or the "adhesive optical member" hereinafter) can be preferably produced, for instance, by a method that includes peeling the release film off the laminate sheet to expose the adhesive face, and applying the adhesive face to an optical member as an adherend.

Fig. 1 shows a schematic cross-sectional diagram of the laminate sheet according to an embodiment.
Fig. 2 shows a schematic cross-sectional diagram of the laminate sheet according to another embodiment.

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of an actual product provided.

As used herein, the term "PSA" refers to, as described earlier, a material that exists as a soft solid (a viscoelastic material) in a room temperature range and has a property to adhere easily to an adherend with some pressure applied. As defined in "Adhesion : Fundamental and Practice" by C. A. Dahlquist (McLaren & Sons (1966), P. 143), PSA referred to herein may be a material that has a property satisfying complex tensile modulus E* (1Hz) < $10^7$ dyne/$cm^2$ (typically, a material that exhibits the described characteristics at 25 °C).

Structural example of laminate sheet

The laminate sheet disclosed herein comprises a PSA layer, and first and second films laminated on first and second faces of the PSA layer. The first film is a release film. The release film here refers to a film of which the face laminated onto the PSA layer is a releasable face (release face). The second film can be a release film or a non-releasable film. The laminate sheet disclosed herein can be used as a PSA sheet upon removal of the release film laminated on the PSAlayer to expose the adhesive face. Thus, the laminate sheet disclosed herein can also be thought as a release-film-bearing PSA sheet that comprises a PSA sheet and a release film protecting an adhesive face of the PSA sheet.

Fig. 1 schematically illustrates the structure of the laminate sheet according to an embodiment. Laminate sheet 40 comprises a PSA layer 10, and first and second films 21 and 22 laminated, respectively, on first and second faces 10a and 10b of PSA layer 10. First film 21's face (face A) 21a in contact with PSAlayer 10 is a release face. Similarly, second film 22's face (face A) 22a is also a release face. In other words, in this embodiment, first and second films 21 and 22 are both release films. PSA layer 10 in laminate sheet 40 can be thought as an adhesively double-faced PSA sheet (substrate-free double-faced PSA sheet) 42 of which first and second faces 10a and 10b can be used as adhesive faces. In Fig. 1, "10 (42)" indicates that PSA layer 10 can be thought as PSA sheet 42 formed of the PSA layer. It is noted that in first and second films 21 and 22, faces (faces B) 21b and 22b on the reverse sides of faces A 21a and 22a can be each independently a release face or a non-release face.

The first and second films 21 and 22 can be selected so that their combined thickness $T_{SUM}$ is 80 μm or greater. Face A 21a of first film 21 has a maximum protrusion height $Rp_{1A}$ of less than 50 nm, or preferably 30 nm or less. Face A 22a of second film 22 has a maximum protrusion height $Rp_{2A}$ of preferably less than 50 nm, or more preferably 30 nm or less. PSA layer 10 is formed from, for instance, a photocurable PSA composition.

For instance, as shown in Fig. 1, laminate sheet 40 prior to use may have a form of roll 100 wound around a core (roll core) 80. Laminate sheet 40 can be used by removing first and second films 21 and 22 from PSA layer 10 and applying exposed adhesive faces 10a and 10b to adherends.

Fig. 2 schematically illustrates the structure of the laminate sheet according to another embodiment. Laminate sheet 50 comprises a PSA layer 10, and first and second films 21 and 32 laminated, respectively, on first and second faces 10a and 10b of PSA layer 10. In this embodiment, face A 32a of second film 32 (i.e. the face laminated on PSA layer 10) is a non-releasable surface (non-release face). The second film in which the face laminated on the PSA layer is non-releasable as this can be thought as a support substrate of the PSA layer. PSA layer 10 is fixed to face A 32a of second film 32, that is, PSA layer 10 is provided not to be separated from second film 32. On the other hand, in this embodiment, face A 21a of first film 21 is a release face, similar to the example shown in Fig. 1. In other words, in this embodiment, first film 21 is a release film and second film 32 is a support substrate. As a result, PSA layer in laminate sheet 50 and second film (support substrate) 32 are united to constitute an adhesively single-faced PSA sheet 52 of which first face 10a can be used as an adhesive face. It is noted that in first and second films 21 and 32, faces (faces B) 21b and 32b on the reverse sides of faces A 21a and 32a can be each independently a release face or a non-release face.

The first and second films 21 and 32 can be selected so that their combined thickness $T_{SUM}$ is 80 μm or greater. Face A21a of first film 21 has a maximum protrusion height $Rp_{1A}$ of less than 50 nm, preferably 45 nm or less, or more

preferably 40 nm or less. The maximum protrusion height $Rp_{2A}$ of face A 32a of second film (support substrate) 32 is not particularly limited. In some embodiments, the support substrate's face A can have a maximum protrusion height of, for instance, less than 50 nm, 45 nm or less, or even 40 nm or less.

For instance, as shown in Fig. 2, laminate sheet 50 prior to use may have a form of roll 200 wound around core 80. Laminate sheet 50 can be used by removing first film 21 from PSA layer 10 and applying exposed adhesive face 10a to an adherend.

While Fig. 1 exemplifies roll 100 in an embodiment of laminate sheet 40 wound around core 80, roll 100 can be in an embodiment free of core 80, that is, an embodiment of so-called coreless roll in which laminate sheet 40 is wound alone. The same is true with roll 200 shown in Fig. 2.

Fig. 1 exemplifies roll 100 wound with the second film 22 on the inside, but it can be a roll wound with the first film 21bon the inside. Similarly, Fig. 2 exemplifies roll 200 wound with the second film (support substrate) 32 on the inside, but it can be a roll wound with the first film 21 on the inside and the second film (support substrate) 32 on the outside.

Figs. 1 and 2 show examples of PSA layer 10 having a monolayer structure, but the structure of PSA layer 10 is not limited to this; it may have a multilayer structure with two or more layers. For instance, the PSA layer may be structured to include two or more sublayers formed of the same or different PSA. The PSA layer can be a substratecontaining PSA layer in which a non-releasable substrate is integrated (buried) between the first and second faces. As the substrate, plastic film, paper, and nonwoven fabric can be used. From the standpoint of the productivity and transparency, a PSA layer free of a substrate integrated between the first and second faces (i.e. a substrate-free PSAlayer) is preferable and a substrate-free PSA layer having a monolayer structure is more preferable.

Release film

The first film in the laminate sheet disclosed herein is a release film in which at least the side (face A) laminated on the PSA layer is a release face. The second film in the laminate sheet disclosed herein can be a release film in which at least the side (face A) laminated on the PSA layer is a release face, or a support substrate in which the face Ais a non-release face. When the second film is a release film, the second film can be a release film having the same constitution as the release film used as the first film, or a release film having a different constitution.

The release film's face A (or the "releasable face A" hereinafter) preferably has a maximum protrusion height Rp of less than 50 nm. By this, the PSA layer surface (adhesive face) in releasable contact with the face A is likely to be highly smooth, suited for optical applications. In addition, for instance, when the laminate sheet is wound in a roll, formation of open pores is inhibited and the highly smooth adhesive face is easily maintained.

Here, the maximum protrusion height (Rp) in this description refers to the maximum protrusion height determined based on JIS B 0601:2001, using a contact surface roughness analyzer unless otherwise noted. As the contact surface roughness analyzer, for instance, a stylus-type surface roughness tester SV3100S4 available from Mitutoyo Corporation or an equivalent product can be used. Specific operations and conditions of the measurement can be set according to the measurement conditions described later in the working examples or to obtain data equivalent or comparable to data obtained according to the measurement conditions.

From the standpoint of further smoothing the adhesive face, the maximum protrusion height Rp of the releasable face A is advantageously 45 nm or less, preferably 40 nm or less, possibly 35 run or less, or even 30 run or less. In some embodiments, the maximum protrusion height Rp of the releasable face A can be 25 run or less, 20 nm or less, or even below 20 nm. The lower limit of the releasable face A's maximum protrusion height Rp is not particularly limited. From the standpoint of improving the smoothness of the adhesive face, the smaller the releasable face A's maximum protrusion height Rp is, the more preferable it is. On the other hand, from the standpoint of the cost and productivity, in some embodiments, it can be 5 nm or greater, 10 nm or greater, 15 nm or greater, or even 20 nm or greater. Examples of favorable embodiments of the laminate sheet disclosed herein include an embodiment where the releasable face A's maximum protrusion height Rp is 20 nm or greater below 50 nm, an embodiment where it is 20 run or greater and 30 run or less, an embodiment where it is 5 run or greater below 50 nm, an embodiment where it is 5 nm or greater and 30 run or less, and an embodiment where it is 5 run or greater below 20 nm.

In an embodiment where both the first and second films are release films, the releasable face A's upper and lower limits or their numerical ranges are satisfied preferably by one of the two films or more preferably by each of the two films.

In an embodiment where both the first and second films are release films, the maximum protrusion height $Rp_{2A}$ of the second film's face A can be the same with or different from the maximum protrusion height $Rp_{1A}$ of the first film's face A. In some embodiments, the absolute value of the difference between $Rp_{1A}$ and $Rp_{2A}$ (i.e. $|Rp_{1A} - Rp_{2A}|$) can be, for instance, about 20 nm or less; from the standpoint of efficiently enhancing the optical homogeneity of the PSA layer, it is preferably about 10 nm or less, or more preferably about 5 nm or less.

The release film used as the first film and/or the second film is not particularly limited and can be suitably selected in accordance with the purpose. Non-limiting examples of usable release film include a release film having a release layer (post-release-treatment layer) on a surface of a release film substrate; and a release film formed from a low-adhesive resin

such as a fluoropolymer (polytetrafluoroethylene, etc.) and polyolefinic resin (polyethylene, polypropylene, etc.). In some embodiments, it is preferable to use a release film having a release layer on a release film substrate.

As the release film substrate, various types of plastic film can be used. In this description, the plastic film is typically a non-porous sheet and is conceptually distinct from the non-woven fabric (i.e. conceptually excludes the non-woven fabric).

Examples of the plastic film material include polyester-based resins such as polyethylene terephthalate (PET), polybutylene terephthalate (PBT) and polyethylene naphthalate (PEN); polyolefinic resins such as polyethylene (PE), polypropylene (PP), ethylene-propylene copolymer and ethylene-butene copolymer; cellulose-based resins such as diacetyl cellulose and triacetyl cellulose (TAC); acetate-based resins; polycarbonates (PC); polyamides (PA) such as nylon 6, nylon 66 and partially aromatic polyamides; polyimides such as transparent polyimide (CPI); polyamide-imides (PAI); polyether ether ketone (PEEK); polysulfone-based resins; polyether sulfone-based (PES-based) resins; cyclic polyolefins such as norbornene-based resins; (meth)acrylic resins; polyvinyl chloride-based resins; polyvinylidene chloride-based resins; polystyrene-based resins; polyvinyl alcohol-based resins; ethylene-vinyl acetate copolymer resins; ethylene-vinyl alcohol copolymers; polyarylate-based resins; and polyphenylene sulfides (PSS). A release film substrate formed from one species or a mixture of two or more species among these resins can be used. A particularly preferable release film substrate is polyester-based resin film (e.g. PET film) formed from a polyester-based resin.

The release layer can be formed by subjecting a release film substrate as described above to surface treatment with a release agent. The release agent can be a known release agent such as silicone-based release agent, long-chain alkyl-based release agent, fluorine-based release agent and molybdenum(IV) sulfide. The thickness and formation method of the release layer are not particularly limited and can be selected to obtain desirable release properties on the face A of the release film. While o particular limitations are imposed, the release layer usually has a thickness of suitably 0.01 μm or greater, preferably 0.05 μm or greater, or possibly 0.08 μm or greater. The thickness of the release layer can be, for instance, 3 μm or less, 1 μm or less, or even 0.5 μm or less. Examples of the method for forming the release layer on the release film include a method where a release agent is applied to a release film substrate and allowed to cure (dry, crosslink, react, etc.), a method where a pre-formed release layer is laminated onto a release film substrate, and a method where a release agent and a release film substrate or its forming material are co-extruded.

A favorable example of the release agent is silicone-based release agent. The silicone-based release agent used can be in a solvent-type, solvent-free or aqueous (aqueous solution, water dispersion) form. In some embodiments, from the standpoint of the ease of adjusting the viscosity and the likelihood of forming a highly homogenic release layer, a solvent-type silicone-based release agent can be preferably used.

The silicone-based release agent can be of any type including addition reaction, condensation reaction, UV curable and electron beam curable types. From the standpoint of the reactivity and stability of performance, in some embodiments, a silicone-based release agent of an addition reaction type can be preferably used.

The addition-reaction-type silicone-based release agent usually comprises an organopolysiloxane having an organohydrogenpolysiloxane and aliphatic unsaturated group. It can be a solvent-free type or solvent-based (solvent type). For instance, it is preferable to use a photocurable addition-reaction-type silicone-based release agent that cures via crosslinking by a thermal addition reaction.

As the thermally curable addition-reaction-type silicone release agent, it is possible to use, for instance, a release agent that comprises a Si-H group-containing polysiloxane (a polysiloxane whose molecule has a hydrogen atom (H) bonded to a silicon atom (Si)) and a Si-H reactive polysiloxane (a polysiloxane whose molecule has a Si-H reactive functional group (a functional group reactive with a Si-H bond (covalent bond between Si and H))). Such a release agent cures via crosslinking by an addition reaction between the Si-H group and the Si-H group-reactive functional group.

In the Si-H group-containing polysiloxane, the H-bonded Si can be in the main chain or in a side chain. A preferable polysiloxane has two or more Si-H groups per molecule. The polysiloxane having two or more Si-H groups include dimethyl hydrogen siloxane-based polymer such as poly(dimethyl siloxane-methyl siloxane).

On the other hand, as the Si-H reactive polysiloxane, it is possible to use a polysiloxane in which a Si-H reactive functional group or a side chain including such a functional group is bonded to Si (e.g. terminal or internal Si of the main chain) forming the main chain (skeleton) of a siloxane-based polymer. A particularly preferable polysiloxane has a Si-H reactive functional group directly bonded to Sin in the main chain. A preferable polysiloxane includes two or more Si-H reactive functional groups in the molecule. Examples of the Si-H reactive functional group include alkenyl groups such as vinyl group and hexenyl group.

Examples of the siloxane-based polymer forming the main chain include poly(dialkyl siloxane) (the two alkyl groups can be the same or different) such as poly(dimethyl siloxane), poly(diethyl siloxane) and poly(methyl ethyl siloxane); poly(alkyl aryl siloxane); and a polymer of several Si-containing monomers, such as poly(dimethyl siloxane-methyl siloxane). A particularly favorable main-chain polymer is poly(dimethyl siloxane).

In some embodiments, it is preferable to use a thermally curable addition-reaction-type silicone release agent that comprises a polysiloxane including two or more Si-H groups per molecule as well as a polysiloxane including two or more Si-H reactive functional groups per molecule. The mixing ratio of the Si-H group-containing polysiloxane and the Si-H

reactive polysiloxane in the release agent is not particularly limited as long as it is in a range capable of achieving silicone transfer in an aforementioned amount upon sufficient curing of the release agent. It is preferably selected so that the X number of moles of Si of Si-H group and the Y number of moles of Si-H reactive functional group satisfy $X \geq Y$. In typical, XY is preferably about 1:1 to 2:1 (more preferably 1.2:1 to 1.6:1).

The addition-reaction-type silicone-based release agent may include a catalyst to accelerate the crosslinking reaction. Examples of the catalyst include platinum-based catalysts such as platinum powder, platinic chloride and a derivative thereof. The amount of catalyst added is not particularly limited. For instance, it is preferably selected in the range of 0.1 ppm to 1000 ppm (more preferably 1 ppm to 100 ppm) relative to the Si-H reactive polysiloxane.

As the silicone-based release agent, it is possible to use a mixture of aforementioned components suitably prepared or obtained, or a commercial product that includes aforementioned components. Besides the aforementioned components, other known and commonly used additives can be suitably added as necessary, for instance, fillers, anti-static agent, antioxidant, UV absorber, plasticizer, colorant (dye, pigment) and so on.

In other embodiments, it is preferable to use a release film having a release layer treated with a long-chain alkyl-based release agent. As the long-chain alkyl-based release agent, it is possible to use, for instance, a polyvinyl carbamate obtained by allowing a polyvinyl alcohol-based polymer to react with a long-chain alkyl isocyanate (e.g. with 8 to 30 carbon atoms), and an alkyl urea derivative obtained by allowing a polyethylene imine to react with a long-chain alkyl isocyanate (e.g. with 8 to 30 carbon atoms). As the release agent for the release film used in the laminate sheet disclosed herein, it is possible to use a long-chain alkyl-based release agent that includes a long-chain alkyl-based material such as those described in Japanese Patent Application Publication No. 2016-145341.

The silicone-based release agent can be preferably used for preparing a release film whose releasable face A has a maximum protrusion height Rp in a range of, for instance, 20 nm or greater below 50 nm, 20 run or greater and 40 run or less, 20 run or greater and 30 run or less, etc.; however, it is not limited to these. Anon-silicone-based release agent such as long-chain alkyl-based release agent can be used for preparing a release film having a releasable face A whose maximum protrusion height Rp is in a range of, for instance, 20 run or greater below 50 nm, 20 run or greater and 40 nm or less, 20 nm or greater and 30 nm or less, etc.; and it can be preferably used for preparing a release film having a releasable face A whose maximum protrusion height Rp is in a range of, for instance, 5 nm or greater below 50 nm, 5 nm or greater and 30 nm or less, 5 nm or greater below 25 nm, 10 nm or greater below 25 nm, 15 nm or greater below 30 nm, 15 nm or greater below 25 nm, etc.; however, it is not limited to these.

In some embodiments of the laminate sheet disclosed herein, the release film in the laminate sheet is preferably formed to show a rate of retained adhesion (percent peel strength retained) of 60 % or higher (more preferably 70 % or higher, or yet more preferably 80 % or higher), determined with respect to the face A (release face) by the method described below. The release film's face A has a rate of retained adhesion of typically 100 % or lower. From a practical standpoint including the cost and productivity, it can be 95 % or lower, or even 90 % or lower.

Method for determining rate of retained adhesion

In an environment at 23 °C and 50 % RH, product name "NO. 31B" (available from Nitto Denko Corporation, PSAtape with polyester substrate, 19 mm wide) is applied to a stainless steel plate by moving a 2 kg roller back and forth once. The resultant is left standing for 30 minutes in the environment at 23 °C and 50 % RH. Subsequently, in the same environment, while peeling the PSA tape 50 mm at a peel angle of 180° and a tensile speed of 300 mm/min using a tensile tester, the stress is measured and the maximum stress value is determined as the peel strength $F_{R0}$ (N/19mm) of the blank.

In an environment at 23 °C and 50 % RH, product name "NO. 31B" (available from Nitto Denko Corporation, PSAtape with polyester substrate, 19 mm wide) is applied to the face A of a release film of interest by moving a 5 kg roller back and forth once. In a heat dryer at 70 °C, the resultant is heated under a 5 kg load for 24 hours and further left standing for 2 hours in an environment at 23 °C and 50 % RH. After this, the PSA tape (product name "NO. 31B") is removed from the release film's face A and applied to a stainless steel plate by moving a 2 kg roller back and forth once. The resultant is left standing for 30 minutes in the environment at 23 °C and 50 % RH. Subsequently, in the same environment, while peeling the PSA tape 50 mm at a peel angle of 180° and a tensile speed of 300 mm/min using a tensile tester, the stress is measured and the maximum stress value is determined as the retained peel strength $F_{R1}$ (N/19mm).

Using the retained peel strength ($F_{R1}$) and the blank's peel strength ($F_{R0}$), the rate (%) of retained adhesion is determined by the next formula:

$$\%\ \text{retained adhesion} = (F_{R1}/F_{R0}) \times 100$$

A release film having a high rate of retained adhesion tends to be easily unwound from a roll form (have good unwinding properties). This is particularly significant in the release film whose face A has a low maximum protrusion height Rp (e.g. 45 nm or less, 35 nm or less, or below 30 nm). The rate of retained adhesion can be adjusted through, for instance, the selection of a release agent used for forming the release layer that constitutes the release film's face A. When using a

silicone-based release agent, it is preferable to select a non-transfer silicone-based release agent.

Support substrate

In some embodiments of the laminate sheet disclosed herein, the second film can be a support substrate, that is, a film having a non-releasable face A forming the surface in contact with the PSA layer. As the support substrate, various types of plastic film can be used. The material forming the plastic film can be arbitrarily selected among the same materials as those exemplified as the plastic film material that can be used for the release film substrate. Examples of particularly preferable plastic film include polyester-based resin film such as PET film, cellulose-based resin film such as diacetyl cellulose film and triacetyl cellulose (TAC) film, polyimide-based resin film such as transparent polyimide (CPI) film, and polyether sulfone-based (PES-based) resin film. Transparent plastic film is preferable. The face A of the support substrate can be subjected to surface treatment such as primer coating, corona discharge treatment and plasma treatment. The surface treatment may contribute to an increase in tightness of adhesion between the face A and PSA layer.

In the art disclosed herein, the plastic film used as the aforementioned support substrate or release film substrate may be a non-stretched film, uni-axially stretched film or bi-axially stretched film. The plastic film may have a monolayer structure or a multilayer (e.g. three-layer) structure including two or more sublayers. The plastic film may include a known additive that can be used for support substrates or release film substrates of PSA sheets, such as antioxidant, anti-aging agent, heat resistant stabilizer, photostabilizer, UV ray absorber, colorant such as pigment and dye, slip agent, filler, antistatic agent, nucleating agent, etc. In a multi-layer plastic film, each additive can be added in each sublayer or in some sublayers.

The support substrate's face Ais not particularly limited in Rp. The maximum protrusion height Rp of the support substrate's face Ais usually suitably 300 nm or less, or preferably 150 nm or less. From the standpoint of increasing the transparency of the PSA sheet including the support substrate, the maximum protrusion height Rp of the support substrate's face A is advantageously, for instance, less than 50 nm, preferably 45 nm or less, possibly 40 nm or less, 35 nm or less, 30 nm or less, 25 nm or less, or even 20 nm or less. From the standpoint of the cost and productivity, in some embodiments, the maximum protrusion height Rp of the support substrate's face A can be, for instance, 2 nm or greater, 5 nm or greater, 10 nm or greater, or even 15 nm or greater. The face A's Rp of the support substrate (second film) and that of the release film (first film) can be similar or different.

First and second films

In the laminate sheet disclosed herein, the first and second films preferably have a combined thickness $T_{SUM}$ of 80 $\mu$m or greater. Such an embodiment may lead to reduced occurrence of optical distortion in the PSA layer and may even effectively increase the optical homogeneity of the PSA layer. Although the reason for obtaining such effects should not be interpreted in a limited manner, the following can be considered, for instance. In general, when forming a PSA layer from a liquid PSA composition, contraction occurs when dried or cured. When the degree of contraction varies locally, the variation (unevenness) can be observed as optical distortion of the PSA layer. When winding the laminate sheet into a roll or unwinding the laminate sheet from the roll, the associated deformation may cause the PSA layer to experience expansion or contraction stress in in-plane directions. Uneven expansion and contraction of the PSA layer caused by this may also lead to the occurrence of optical distortion in the PSAlayer. It is presumed that according to the laminate sheet disclosed herein, with the first and second films having at least the prescribed combined thickness $T_{SUM}$, the rigidity of the laminate sheet is increased at large; this suitably limits free expansion and contraction of the PSA layer between the first and second films, thereby inhibiting uneven expansion/contraction (homogenizing the degree of expansion/contraction) of the PSA layer to reduce the occurrence of optical distortion.

When forming a PSA layer from an active energy ray curable PSA composition, a great deal of curing contraction generally occurs; and therefore, optical distortion is likely to occur due to uneven curing contraction while the PSA layer is being formed. When the combined thickness $T_{SUM}$ of the first and second films is at least the prescribed value, the effect to reduce the occurrence of uneven expansion/contraction of the PSA layer is particularly well displayed when forming the PSA layer by means of allowing a liquid layer of a PSA composition to cure between the faces A of the two films. Thus, the laminate sheet disclosed herein can be particularly preferably made in an embodiment having a PSA layer formed from a solvent-free or active energy ray curable PSA composition (e.g. a solvent-free active energy ray curable PSA composition).

From the standpoint of obtaining greater effect to reduce the occurrence of optical distortion, in some embodiments, the combined thickness $T_{SUM}$ of the first and second films is preferably 90 $\mu$m or greater, more preferably 100 $\mu$m or greater, possibly 110 $\mu$m or greater, 120 $\mu$m or greater, or even 140 $\mu$m or greater. The upper limit of thickness $T_{SUM}$ is not particularly limited. From the standpoint of preventing the laminate sheet from having a thickness greater than necessary, the thickness $T_{SUM}$ is usually suitably 1000 $\mu$m or less, preferably 800 $\mu$m or less, possibly 500 $\mu$m or less, 300 $\mu$m or less, 250 $\mu$m or less, 200 $\mu$m or less, 180 $\mu$m or less, or even 160 $\mu$m or less. The laminate sheet disclosed herein can be made

in an embodiment having a thickness $T_{SUM}$ of 135 μm or less, 125 μm or less, or 115 μm or less.

The first film's thickness can be selected to have a combined thickness $T_{SUM}$ of 80 μm or greater in relation to the second film's thickness, and it is not particularly limited. The first film's thickness can be selected in the range between, for instance, about 2 μm and 500 μm. From the standpoint of the ease of handling the first film in producing or using the laminate sheet, the first film's thickness is advantageously 5 μm or greater, preferably 10 μm or greater, or more preferably 25 μm or greater. From the standpoint of more favorably reducing the occurrence of optical distortion, in some embodiments, the first film's thickness is preferably 35 μm or greater, more preferably 40 μm or greater, possibly 45 μm or greater, 50 μm or greater, 60 μm or greater, or even 70 μm or greater. From the standpoint of preventing the laminate sheet from having a thickness greater than necessary, the first film's thickness is usually suitably 300 μm or less, preferably 250 μm or less, possibly 200 μm or less, 190 μm or less, 150 μm or less, 130 μm or less, 110 μm or less, 90 μm or less, or even 80 μm or less.

The second film's thickness can be selected to have a combined thickness $T_{SUM}$ of 80 μm or greater in relation to the first film's thickness, and it is not particularly limited. The second film's thickness can be selected in the range between, for instance, about 2 μm and 500 μm. From the same standpoint as the first film, the second film's thickness is advantageously 5 μm or greater, preferably 10 μm or greater, or more preferably 25 μm or greater. In some embodiments, it is preferably 35 μm or greater, more preferably 40 μm or greater, possibly 45 μm or greater, 50 μm or greater, 60 μm or greater, or even 70 μm or greater. The second film's thickness is usually suitably 300 μm or less, preferably 250 μm or less, possibly 200 μm or less, 190 μm or less, 150 μm or less, 130 μm or less, 110 μm or less, 90 μm or less, or even 80 μm or less.

In some embodiments of the laminate sheet disclosed herein, from the standpoint of optical distortion reduction, each of the first and second films can have a thickness of 25 μm or greater (preferably 35 μm or greater, more preferably 50 μm or greater, or yet more preferably 70 μm or greater). From the standpoint of preventing the laminate sheet from having a thickness greater than necessary, in some embodiments, each of the first and second films can have a thickness of 200 μm or less (preferably 150 μm or less, or more preferably 100 μm or less).

The thickness of the first film and that of the second film can be similar or different. When the first and second films differ in thickness, their relationship can be first film < second film or second film < first film.

In some embodiments of the laminate sheet disclosed herein, at least one (preferably each) of the first and second films can be a film that has a thickness T (mm) and an elastic modulus E' (MPa) satisfying the next formula 0.10 (N•mm) < $E' \times T^3$. The $E' \times T^3$ value is proportional to the film's bending rigidity. Thus, a large $E' \times T^3$ value of the film means that the film has high bending rigidity. According to a film with higher bending rigidity, free expansion and contraction of the PSA layer in contact with the film is limited and the occurrence of optical distortion can be more greatly inhibited.

Here, the film's elastic modulus E' can be determined using a commercial dynamic viscoelastometer. In particular, a sample (first or second film) subject to measurement is cut to a 30 mm long, 5 mm wide strip to prepare a test piece. The tensile storage elastic modulus of the test piece is determined in a temperature range of 0 °C to 100 °C, using a dynamic viscoelastometer (RSA-III available from TA Instruments) in a tension mode, at a chuck distance of 23 mm at a heating rate of 10 °C/min at a frequency of 1 Hz at 0.05 % strain. The value obtained is used as the elastic modulus E'.

In some embodiments, the $E' \times T^3$ value of at least one (preferably each) of the first and second films can be, for instance, 0.12 N•mm or greater, 0.15 N•mm or greater, 0.20 N•mm or greater, 0.25 N•mm or greater, 0.30 N•mm or greater, 0.50 N•mm or greater, 0.70 N•mm or greater, or even 0.90 N•mm or greater. According to a PSA sheet having a larger $E' \times T^3$ value, the effect to reduce the occurrence of optical distortion of the PSA layer can be more favorably obtained. The laminate sheet disclosed herein can also be made in an embodiment where at least one (preferably each) of the first and second films has an $E' \times T^3$ value of 2.0 N•mm or greater, 3.0 N•mm or greater, or 4.0 N•mm or greater. The maximum $E' \times T^3$ value is not particularly limited. From the standpoint of the handling properties of the film and the laminate sheet including the film, etc., it is usually suitably about 100 N•mm or less, or preferably about 50 N•mm or less (e.g. 20 N• mm or less). From the standpoint of preventing the laminate sheet from having a thickness greater than necessary, in some embodiments, in the film with a larger $E' \times T^3$ value between the first and second films, the $E' \times T^3$ value can be, for instance, 10 N•mm or less, 7 N•mm or less, 5 N•mm or less, or even 3 N•mm or less.

The $E' \times T^3$ values of the first and second films can be similar or different. The laminate sheet disclosed herein can be preferably made in an embodiment where the release film in the laminate sheet (each of the first and second films in an embodiment where the first and second films are both release films) satisfies any of an aforementioned $E' \times T_3$.

The elastic modulus E' of each film is not particularly limited. It can be, for instance, 300 MPa or greater, or even 500 MPa or greater. From the standpoint of readily obtaining an aforementioned favorable $E' \times T^3$ value, in some embodiments, the film's elastic modulus is, for instance, preferably 1000 MPa or greater, or more preferably 1500 MPa or greater (e.g. 2000 MPa or greater). The maximum E' value is not particularly limited. From the standpoint of the availability and the ease of manufacturing, the film's E' is usually suitably 30000 MPa or less, preferably 20000 MPa or less, or more preferably 10000 MPa or less (e.g. 6000 MPa or less). The film's E' can be adjusted through the composition of the film and the materials used as well as their combination, etc.

In the laminate sheet disclosed herein, each of the faces (or "faces B" hereinafter) on the reverse sides of faces A

of the first and second films can be independently a release face or a non-release face. The face B is not particularly limited in maximum protrusion height Rp. The maximum protrusion height Rp of the face B can be similar to or different from the maximum protrusion height Rp of the face A. In the film having an embodiment where the faces A and B vary in maximum protrusion height Rp, the relation of their maximum protrusion heights Rp can be either face A < face B or face B < face A.

In some embodiments, the face B's maximum protrusion height Rp can be, for instance, below 50 nm, 45 nm or less, 40 nm or less, 35 nm or less, 30 nm or less, 25 nm or less, 20 nm or less, or even below 20 nm. The film whose face B has a relatively small maximum protrusion height Rp can be advantageous in view of the productivity and availability of the film because the maximum protrusion height Rp does not significantly vary between the faces A and B. The lower limit of the face B's maximum protrusion height Rp is not particularly limited. From the standpoint of the cost and ease of manufacturing, it can be, for instance, 2 nm or greater, 5 nm or greater, 10 nm or greater, 15 nm or greater, or even 20 nm or greater.

In other embodiments, the face B's maximum protrusion height Rp can be, for instance, 50 nm or greater, 100 nm or greater, 200 nm or greater, 350 nm or greater, 450 nm or greater, or even 550 nm or greater. From the standpoint of the handling properties, the film whose face B has a relatively large maximum protrusion height Rp can be advantageous due to the face B's slip properties. The upper limit of the face B's maximum protrusion height Rp is not particularly limited. From the standpoint of the cost and availability, it can be, for instance, below 2000 nm, 1500 nm or less, 1000 nm or less, 800 nm or less, 600 nm or less, 500 nm or less, 450 nm or less.

Between the first and second films, both their faces B can have relatively small maximum protrusion heights Rp, both their faces B can have relatively large maximum protrusion heights Rp, the face B of one can have a relatively small maximum protrusion height Rp while the face B of the other has a relatively large protrusion height Rp. The relationship between the Rp of the first film's face B and that of the second film's face B is not particularly limited. The maximum protrusion height Rp of the second film's face B can be similar to or different from that of the first film's face B. In the laminate sheet in an embodiment where the first and second film vary in face B's maximum protrusion height Rp, the relationship of maximum protrusion height Rp between the faces B of the first and second films can be either first film < second film or second film < first film.

PSA layer

In the art disclosed herein, the type of PSA forming the PSA layer in the laminate sheet is not particularly limited. For example, the PSA layer may be constituted, comprising one, two or more species of PSA selected among various known species of PSA, such as an acrylic PSA, rubber-based PSA (natural rubber-based, synthetic rubber-based, their mixture-based, etc.), silicone-based PSA, polyester-based PSA, urethane-based PSA, polyether-based PSA, polyamide-based PSA, fluorine-based PSA, etc. Here, the acrylic PSA refers to a PSA comprising an acrylic polymer as the base polymer (the primary component among polymers, i.e. a component accounting for more than 50 % by mass). The same applies to the rubber-based PSA and other PSA. In a PSA layer preferable from the standpoint of the transparency, weatherability, etc., the acrylic PSA content is 50 % by weight or greater, more preferably 70 % by weight or greater, or yet more preferably 90 % by weight or greater. The acrylic PSA content can be greater than 98 % by weight, or the PSA layer may essentially consist of an acrylic PSA.

As used herein, the term "(meth)acrylate" comprehensively refers to acrylate and methacrylate. Similarly, the term "(meth)acryloyl" comprehensively refers to acryloyl and methacryloyl while the term "(meth)acryl" comprehensively refers to acryl and methacryl.

In this description, the acrylic polymer refers to a polymer that comprises a (meth)acrylic monomer as a monomeric component constituting the acrylic polymer. In other words, it refers to a polymer comprising a monomer unit derived from a (meth)acrylic monomer. Herein, the (meth)acrylic monomer refers to a monomer having at least one (meth)acryloyl group per molecule.

Although not particularly limited to, in an embodiment of the art disclosed herein, the PSA layer can be preferably prepared, using a PSA composition that comprises monomeric components that constitute the acrylic polymer. Hereinafter, such a PSA composition may be referred to as an "acrylic PSA composition." Herein, the term "monomeric components that constitute an acrylic polymer" refers to monomeric components constituting the acrylic polymer in the PSA obtained from the acrylic PSA composition. In the acrylic PSAcomposition, the monomeric components may be included as unreacted monomers (i.e. as starting monomers whose polymerizable functional groups are unreacted), in a polymerized form (i.e. as a monomer unit), or in both forms.

Monomeric component

In an embodiment of the art disclosed herein, the PSA layer can be formed with a PSA composition comprising as a monomeric component constituting the acrylic polymer, a component (A) described below. In a preferable embodiment, the PSA layer can be preferably formed with an acrylic PSA composition that comprises at least the component (A) as a

monomeric component constituting the acrylic polymer and further comprises, as necessary, one or each of components (B) and (C) described below.

(Component (A))

The component (A) is an alkyl (meth)acrylate having an alkyl group with 2 to 18 carbons at the ester end. Hereinafter, an alkyl (meth)acrylate having an alkyl group with a number of carbons ranging from X up to Y at the ester end may be represented by "$C_{X-Y}$ alkyl (meth)acrylate." The structure of $C_{2-18}$ alkyl group in the $C_{2-18}$ alkyl (meth)acrylate is not particularly limited. The alkyl group can be either a straight chain or a branched chain. For the component (A), these $C_{2-18}$ alkyl (meth)acrylates can be used singly as one species or in combination of two or more species.

Examples of a $C_{2-18}$ alkyl (meth)acrylate having a straight-chain alkyl group at the ester end include ethyl (meth) acrylate, n-propyl (meth)acrylate, n-butyl (meth)acrylate, n-pentyl (meth)acrylate, n-hexyl (meth)acrylate, n-heptyl (meth) acrylate, n-octyl (meth)acrylate, n-nonyl (meth)acrylate, n-decyl (meth)acrylate, n-undecyl (meth)acrylate, n-dodecyl (meth)acrylate, n-tridecyl (meth)acrylate, n-tetradecyl (meth)acrylate, n-pentadecyl (meth)acrylate, n-hexadecyl (meth) acrylate, n-heptadecyl (meth)acrylate, and n-octadecyl (meth)acrylate. Examples of a $C_{3-18}$ alkyl (meth)acrylate having a branched alkyl group at the ester end include isopropyl (meth)acrylate, tert-butyl (meth)acrylate, isobutyl (meth)acrylate, isopentyl (meth)acrylate, tert-pentyl (meth)acrylate, neopentyl (meth)acrylate, isohexyl (meth)acrylate, isoheptyl (meth) acrylate, 2-ethylhexyl (meth)acrylate, isooctyl (meth)acrylate, isononyl (meth)acrylate, isodecyl (meth)acrylate, 2-propylheptyl (meth)acrylate, isoundecyl (meth)acrylate, isododecyl (meth)acrylate, isotridecyl (meth)acrylate, isomyristyl (meth)acrylate, isopentadecyl (meth)acrylate, isohexadecyl (meth)acrylate, isoheptadecyl (meth)acrylate, and isostearyl (meth)acrylate. The art disclosed herein can be preferably implemented in an embodiment where the component (A) comprises one, two or more species selected from $C_{4-9}$ alkyl acrylates. Preferable examples of $C_{4-9}$ alkyl acrylates include n-butyl acrylate, 2-ethylhexyl acrylate, isooctyl acrylate and isononyl acrylate.

Component (B)

The component (B) is a monomer selected from the group consisting of alicyclic monomers and hetero-ring-containing monomers (heterocyclic monomers). The component (B) is typically used in combination with the component (A) and may contribute to increases in cohesion, transparency and heat resistance of the PSA, etc.

As the alicyclic monomer, any monomer having an alicyclic structure-containing group as well as an unsaturated double bond-containing polymerizable functional group such as a (meth)acryloyl group or a vinyl group may be used without limitations. The alicyclic monomers can be used singly as one species or in combination of two or more species. As used herein, the term "alicyclic structure-containing group" refers to a moiety having at least one alicyclic structure. The term "alicyclic structure" refers to a carbocyclic ring structure which may be saturated or unsaturated, but may not be aromatic. In this description, the alicyclic structure-containing group may be simply referred to as "alicyclic group." Preferable examples of the alicyclic group include a hydrocarbon group and a hydrocarbon-oxy group each having an alicyclic structure.

In the art disclosed herein, preferable alicyclic monomers include an alicyclic (meth)acrylate having an alicyclic group and a (meth)acryloyl group. Specific examples of alicyclic (meth)acrylates include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, isobornyl (meth)acrylate, and dicyclopentanyl (meth)acrylate as well as HPMPA, TMA-2 and HCPA represented by the formulas shown below.

[Chem 1]

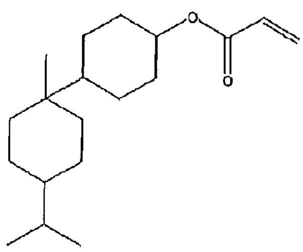
,
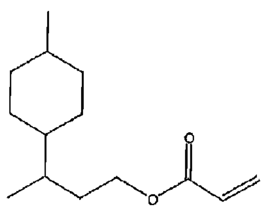
,
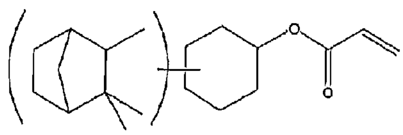

HPMPA TMA−2 HCPA

There are no particular limitations to the number of carbons of the alicyclic group in the alicyclic monomer (in an

alicyclic (meth)acrylate, the number of carbons in the alicyclic (meth)acrylate excluding the (meth)acryloyl group). For instance, an alicyclic monomer whose alicyclic group has 4 to 24 (preferably 5 to 18, more preferably 5 to 12) carbons can be used. In particular, cyclohexyl acrylate (CHA), cyclohexyl methacrylate, isobornyl acrylate (IBXA) and isobornyl methacrylate are preferable. CHA and IBXA are more preferable while CHA is particularly preferable.

Examples of the heterocyclic monomers include cyclic nitrogen-containing monomers and cyclic ether group-containing monomers. Similar to the alicyclic monomer, the heterocyclic monomer can contribute to increases in cohesion, transparency and heat resistance of the PSA. It may also contribute to increase the adhesive strength and cohesive strength of the PSA. Heterocyclic monomers can be used solely as one species or in combination of two or more species.

As the cyclic nitrogen-containing monomer, any monomer having a cyclic nitrogen-containing structure and an unsaturated double bond-containing polymerizable functional group such as a (meth)acryloyl group or a vinyl group may be used without limitations. The cyclic nitrogen-containing structure preferably has a nitrogen atom in the ring structure. Examples of the cyclic nitrogen-containing monomer include vinyl lactam monomers such as N-vinylpyrrolidone, N-vinyl-ε-caprolactam, and methylvinylpyrrolidone; oxazoline group-containing monomers such as 2-vinyl-2-oxazoline, 2-vinyl-5-methyl-2-oxazoline, and 2-isopropenyl-2-oxazoline; and nitrogen-containing heterocyclic vinyl monomers such as vinylpyridine, vinylpiperidone, vinylpyrimidine, vinylpiperazine, vinylpyrazine, vinylpyrrole, vinylimidazole, and vinylmorpholine. The cyclic nitrogen-containing monomer may also be a (meth)acrylic monomer having a nitrogen-containing heterocyclic ring such as a morpholine ring, a piperidine ring, a pyrrolidine ring, a piperazine ring, and an aziridine ring. Specific examples include N-acryloyl morpholine, N-acryloyl piperidine, N-methacryloyl piperidine, N-acryloyl pyrrolidine, and N-acryloyl aziridine. Among them, vinyl lactam monomers are preferable in view of cohesiveness, and N-vinylpyrrolidone is particularly preferable.

As the cyclic ether group-containing monomer, any monomer having a cyclic ether group such as an epoxy group or an oxetane group as well as an unsaturated double bond-containing polymerizable functional group such as a (meth) acryloyl group or a vinyl group may be used without limitations. Examples of the epoxy group-containing monomer include glycidyl (meth)acrylate, 3,4-epoxycyclohexylmethyl (meth)acrylate, and 4-hydroxybutyl (meth)acrylate glycidyl ether. Examples of the oxetane group-containing monomer include 3-oxetanylmethyl (meth)acrylate, 3-methyl-oxetanylmethyl (meth)acrylate, 3-ethyl-oxetanylmethyl (meth)acrylate, 3-butyl-oxetanylmethyl (meth)acrylate, and 3-hexyl-oxetanylmethyl (meth)acrylate.

(Component (C))

The component (C) is a monomer having at least either a hydroxyl group or a carboxyl group.

As the hydroxyl group-containing monomer, any species having a hydroxyl group as well as an unsaturated double bond-containing polymerizable functional group, such as a (meth)acryloyl group or a vinyl group can be used without particular limitations. For the hydroxyl group-containing monomer, solely one species or a combination of two or more species can be used. Examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate; and hydroxyalkylcycloalkane (meth)acrylates such as (4-hydroxymethylcyclohexyl)methyl (meth)acrylate. Other examples include hydroxyethyl(meth)acrylamide, allyl alcohol, 2-hydroxyethyl vinyl ether, 4-hydroxybutyl vinyl ether, diethylene glycol monovinyl ether, etc. Among these, hydroxyalkyl (meth)acrylates are preferable. For instance, a hydroxyalkyl (meth)acrylate having a hydroxyalkyl group of 2 to 6 carbons can be preferably used. In a preferable embodiment, as the hydroxyl group-containing monomer, one, two or more species can be selected and used from 2-hydroxyethyl acrylate (HEA), 2-hydroxyethyl methacrylate, 4-hydroxybutyl acrylate (4HBA) and 4-hydroxybutyl methacrylate. In some preferable embodiments of the art disclosed herein, the hydroxyl group-containing monomer used can be solely 4HBA, solely HEA, or a combination of 4HBA and HEA.

As the carboxyl group-containing monomer, any monomer having a carboxyl group and an unsaturated double bond-containing polymerizable functional group such as a (meth)acryloyl group and a vinyl group may be used without particular limitations. Carboxyl group-containing monomers can be used singly as one species or in combination of two or more species. Examples of the carboxyl group-containing monomer include ethylenic unsaturated monocarboxylic acids such as acrylic acid, methacrylic acid, crotonic acid, carboxyethyl (meth)acrylate, and carboxypentyl (meth)acrylate; and ethylenic unsaturated dicarboxylic acids such as itaconic acid, maleic acid, fumaric acid, and citraconic acid; as well as metal salts (e.g. alkali metal salts) of these; anhydrides of the ethylenic unsaturated dicarboxylic acids such as maleic anhydride and itaconic anhydride. Among these, acrylic acid and methacrylic acid are preferable, and acrylic acid is particularly preferable.

The art disclosed herein can be preferably implemented in an embodiment where the component (C) comprises a hydroxyl group-containing monomer. In other words, it is preferable that the component (C) either consists of a hydroxyl group-containing monomer or comprises a hydroxyl group-containing monomer and a carboxyl group-containing monomer. When the component (C) comprises a hydroxyl group-containing monomer and a carboxyl group-containing

monomer, the hydroxyl group-containing monomer content in the entire component (C) is preferably greater than about 50 % by weight, or more preferably about 80 % by weight or greater (e.g. about 90 % by weight or greater). It is preferable to increase the hydroxyl group-containing monomer content in the component (C) from the standpoint of reducing metal corrosion caused by the carboxyl group, etc. The art disclosed herein can be preferably implemented in an embodiment where the monomeric components are essentially free of a carboxyl group-containing monomer. For instance, the carboxyl group-containing monomer content in the monomeric components can be less than about 1 % by weight, preferably less than about 0.5 % by weight, or more preferably less than about 0.2 % by weight.

The ratio (content) of component (A) to all monomeric components is not particularly limited. From the standpoint of providing suitable cohesion to the PSA, the component (A) content is usually suitably about 90 % by weight or less, preferably about 85 % by weight or less, or yet more preferably about 75 % by weight or less. In a preferable embodiment, the component (A) content can be about 70 % by weight or less (more preferably about 60 % by weight or less, or even about 50 % by weight or less, e.g. about 45 % by weight or less). From the standpoint of the initial adhesiveness to an adherend, etc., the component (A) content is preferably about 30 % by weight or greater, or more preferably about 35 % by weight or greater. In an embodiment, the ratio of component (A) to all monomeric components can be, for instance, about 30 to 75 % by weight.

When the monomeric components include a component (B), the ratio (content) of component (B) to all monomeric components is not particularly limited. In view of the balance of adhesive properties, the component (B) content is usually suitably about 3 % by weight or greater, preferably about 5 % by weight or greater, or more preferably about 8 % by weight or greater, or possibly about 10 % by weight or greater. From the standpoint of the initial adhesion to an adherend, etc., the component (B) content is suitably about 65 % by weight or less, preferably about 60 % by weight or less, or more preferably about 55 % by weight or less (or even about 50 % by weight or less, e.g. less than about 50 % by weight). In a preferable embodiment, the ratio of component (B) to all monomeric components can be about 15 % by weight or greater, about 20 % by weight or greater, about 25 % by weight or greater, or even about 30 % by weight or greater (e.g. about 35 % by eight or greater). In an embodiment, the ratio of component (B) to all monomeric components can be, for instance, about 20 to 50 % by weight.

When the monomeric components include a component (C), the ratio (content) of component (C) to all monomeric components is not particularly limited. From the standpoint of the initial adhesion to an adherend, etc., the component (C) content is typically about 3 % by weight or greater, preferably about 5 % by weight or greater, or more preferably about 8 % by weight or greater (e.g. about 10 % by weight or greater). From the standpoint of providing suitable cohesion to the PSA, the component (C) content is usually preferably about 35 % by weight or less, more preferably about 30 % by weight or less, or even more preferably about 25 % by weight or less. In an embodiment, the component (C) content can be, for instance, about 15 % to 30 % by weight.

Optional monomer

The monomeric components in the art disclosed herein may comprise other monomer(s) (or "optional monomer(s)" hereinafter) in addition to the component (A), component (B) and component (C).

Examples of the optional monomers include an alkyl (meth)acrylate that does not belong to the component (A), that is, an alkyl (meth)acrylate having an alkyl group with a single carbon or 19 or more (e.g. 19 to 24) carbons. Specific examples of such an alkyl (meth)acrylate include methyl (meth)acrylate, n-nonadecyl (meth)acrylate, isononadecyl (meth)acrylate, n-eicosyl (meth)acrylate, isoeicosyl (meth)acrylate, etc. These can be used singly as one species or in combination of two or more species.

Other examples of the optional monomer include a monomer having a functional group that is neither a hydroxyl group nor a carboxyl group. Such a functional group-containing monomer can be used to introduce crosslinking points in the acrylic polymer or to increase the cohesive strength of acrylic polymer. Examples of such a functional group-containing monomer include amide group-containing monomers such as (meth)acrylamide, N,N-dimethyl(meth)acrylamide, and N-methylol(meth)acrylamide; cyano group-containing monomers such as acrylonitrile and methacrylonitrile; sulfonic acid group-containing monomers such as styrene sulfonic acid, allyl sulfonic acid, and 2-(meth)acrylamido-2- methylpropanesulfonic acid; phosphoric acid group-containing monomers such as 2-hydroxyethyl acryloyl phosphate; keto group-containing monomers such as diacetone (meth)acrylamide, diacetone (meth)acrylate, vinyl methyl ketone, and vinyl acetoacetate; isocyanate group-containing monomers such as 2-(meth)acryloyloxyethyl isocyanate; alkoxyl group-containing monomers such as methoxyethyl (meth)acrylate and ethoxyethyl (meth)acrylate; and alkoxysilyl group-containing monomers such as (3-(meth)acryloxypropyl)trimethoxysilane and (3-(meth)acryloxypropyl)triethoxysilane. These can be used singly as one species or in combination of two or more species.

To adjust the acrylic polymer’s glass transition temperature (Tg) or to increase the cohesive strength, the monomeric components in the art disclosed herein may comprise, as the optional monomer, a monomer that is copolymerizable with the components (A), (B) and (C) other than those listed above. Examples of such a copolymerizable monomer include carboxylic acid vinyl esters such as vinyl acetate and vinyl propionate; aromatic vinyl compounds such

as styrene, substituted styrenes ($\alpha$ - methylstyrene, etc.) and vinyl toluene; aromatic ring-containing (meth)acrylates such as aryl (meth)acrylate (e.g. phenyl (meth)acrylate), aryloxyalkyl (meth)acrylate (e.g. phenoxyethyl (meth)acrylate), and arylalkyl (meth)acrylate (e.g. benzyl (meth)acrylate); olefinic monomers such as ethylene, propylene, isoprene, butadiene, and isobutylene; chlorine-containing monomers such as vinyl chloride and vinylidene chloride; vinyl ether-based monomers such as methyl vinyl ether and ethyl vinyl ether; and a macromonomer having a radically polymerizable vinyl group at the monomer end in a vinylic polymer. These can be used singly as one species or in combination of two or more species.

The amounts of these optional monomers used are not particularly limited and can be suitably selected. Usually, the total amount of optional monomers used is suitably less than about 50 % by weight of the monomeric components, preferably about 30 % by weight or less, or more preferably about 20 % by weight or less. The art disclosed herein can be preferably implemented in an embodiment where the total amount of optional monomers used is about 10 % by weight or less (e.g. about 5 % by weight or less) of the monomeric components. When using an optional monomer, from the standpoint of suitably bringing about the effect to increase the adhesive strength or cohesive strength, the amount of the optional monomer used is suitably about 0.5 % by weight or more of the monomeric components, or preferably about 0.8 % by weight or more. The art disclosed herein can be preferably implemented also in an embodiment using essentially no optional monomers (e.g. an embodiment where the amount of optional monomer(s) used is about 0.3 % by weight or less of the monomeric components, or typically about 0.1 % by weight or less).

The component (A), component (B), component (C) and optional monomers described above are typically monofunctional monomers. Besides these monofunctional monomers, for adjusting the storage modulus of the PSA layer, etc., the monomeric components can comprise a suitable amount of a polyfunctional monomer as necessary. As used herein, the monofunctional monomer refers to a monomer having a single polymerizable functional group (typically a radically polymerizable functional group) having an unsaturated double bond, such as a (meth)acryloyl group or a vinyl group. On the other hand, the polyfunctional monomer refers to a monomer having at least two such polymerizable functional groups as described later.

Polyfunctional monomer

The polyfunctional monomer has at least two polymerizable functional groups (radically polymerizable functional groups in typical) having unsaturated double bonds, such as (meth)acryloyl group and vinyl group. Examples of the polyfunctional monomer include an ester of a polyol and a (meth)acrylic acid such as ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth) acrylate, 1,2-ethyleneglycol di(meth)acrylate, 1,4-butanediol di(meth)acrylate, 1,6-hexanediol di(meth)acrylate, 1,12-dodecanediol di(meth)acrylate, trimethylolpropane tri(meth)acrylate, and tetramethylolmethane tri(meth)acrylate; allyl (meth)acrylate, vinyl (meth)acrylate, divinylbenzene, epoxy acrylate, polyester acrylate, and urethane acrylate. Among them, preferable examples are trimethylolpropane tri(meth)acrylate, 1,6-hexanediol di(meth)acrylate, and dipentaerythritol hexa(meth)acrylate. A particularly preferable example is 1,6-hexanediol diacrylate (HDDA). The polyfunctional monomers can be used solely as one species or in combination of two or more species. From the standpoint of the reactivity, it is usually preferable to use a polyfunctional monomer having two or more acryloyl groups.

The amount of the polyfunctional monomer used is not particularly limited. It can be set to suitably achieve the purpose of use of the polyfunctional monomer. In some embodiments, the polyfunctional monomer can be used in an amount of preferably about 3% by weight or less, more preferably 2% by weight or less, or even more preferably about 1% by weight or less (e.g. about 0.7 % by weight or less) of the monomeric components. When using a polyfunctional monomer, its lower limit of use should just be greater than 0 % by weight and is not particularly limited. In typical, the amount of polyfunctional monomer used is suitably about 0.001 % by weight or greater (e.g. about 0.01 % by weight or greater) of the monomeric components; or it can be 0.05 % by weight or greater, or even 0.1 % by weight or greater.

Although not particularly limited, the combined components (A), (B) and (C) content in all the monomeric components is typically greater than about 50 % by weight, preferably about 70 % by weight or greater, more preferably about 80 % by weight or greater, or yet more preferably about 90 % by weight or greater. The art disclosed herein can be preferably implemented in an embodiment where their combined content is about 95 % by weight or greater (e.g. about 99 % by weight or greater). Their combined content can be 100 % by weight. The art disclosed herein can be preferably implemented in an embodiment where their combined content accounts for 99.999 % by weight or less (e.g. 99.99 % by weight or less) of the monomeric components.

The Tg of the copolymer corresponding to the composition of the monomeric components is not particularly limited. For instance, it can be about -70 °C or above. With increasing Tg of the copolymer, it tends to be difficult to later cancel optical distortion once it occurs in the PSA layer. Accordingly, it is particularly significant to reduce the occurrence of optical distortion by applying the art disclosed herein. On the other hand, a high Tg of the copolymer can be advantageous in increasing the PSA layer's cohesion. In some embodiments, the copolymer's Tg can be, for instance, about -60 °C or

above, preferably about -55 °C or above, more preferably about -50 °C or above, or possibly about -45 °C or above. The art disclosed herein can be preferably implemented also in an embodiment where the copolymer's Tg is about -40 °C or above (e.g. about -35 °C or above) or even -30 °C or above. The copolymer's Tg is usually suitably about 0 °C or below. From the standpoint of the adhesion and low-temperature properties of the PSA sheet, etc., it is preferably about -10 °C or below. In some embodiments, the copolymer's Tg can be about - 15 °C or below, or even -20 °C or below. The art disclosed herein can be preferably implemented, for instance, in an embodiment where the copolymer's Tg is about -30 °C or above and about -10 °C or below.

The Tg of the copolymer corresponding to the composition of the monomeric components herein refers to the value determined by the Fox equation based on the composition of the monomeric components. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation above, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i. In this description, Tg values are determined based on only monofunctional monomers. Accordingly, when the monomeric components include a polyfunctional monomer, the combined amount of monofunctional monomers in the monomeric components is counted as 100 % by weight, and the Tg value is determined based on the Tg values of homopolymers of the respective monofunctional monomers and the weight fractions of the monofunctional monomers relative to their combined amount.

As the glass transition temperatures of homopolymers used for determining the Tg value, values found in publicly known documents are used. For example, with respect to the monomers listed below, as the glass transition temperatures of homopolymers of the monomers, the following values are used:

| | |
|---|---|
| n-Butyl acrylate | -55 °C |
| 2-Ethylhexyl acrylate | -70 °C |
| Cyclohexyl acrylate | 15 °C |
| Isobornyl acrylate | 94 °C |
| 2-Hydroxyethyl acrylate | -15 °C |
| 4-Hydroxybutyl acrylate | -40 °C |
| N-vinylpyrrolidone | 54 °C |
| Acrylic acid | 106 °C |
| Methacrylic acid | 228 °C |

With respect to the glass transition temperatures of homopolymers of monomers other than those listed above, values given in "Polymer Handbook" (3rd edition, John Wiley & Sons, Inc., Year 1989) are used. When the literature provides two or more values for a certain monomer, the highest value is used. With respect to monomers for which no glass transition temperatures of the corresponding homopolymers are given in the "Polymer Handbook", values obtained by the measurement method described in Japanese Patent Application Publication No. 2007-51271 are used. With respect to monomers for which nominal glass transition temperatures of homopolymers are provided by a maker, etc., the nominal values can be used as well.

PSA Composition

The PSA layer in the art disclosed herein can be formed with a PSA composition that comprises monomeric components in a composition as described above as a polymerized product, in a non-polymerized form (i.e. in a form where the polymerizable functional groups are still unreacted), or as a mixture of these. The PSAcomposition may be in various forms such as a solvent-based PSAcomposition which comprises PSA (adhesive components) in an organic solvent; an aqueous PSA composition which comprises PSA dispersed in an aqueous solvent; an active energy ray-curable PSA composition prepared so as to form PSA when cured with active energy rays such as UV rays and radioactive rays; and a hot melt-type PSAcomposition which is heated to melting for application and allowed to cool to around room temperature to form PSA.

Herein, the term "active energy ray" in this description refers to an energy ray having energy capable of causing a chemical reaction such as polymerization, crosslinking, initiator decomposition, etc. Examples of the active energy ray herein include lights such as ultraviolet (UV) rays, visible lights, infrared lights, radioactive rays such as α rays, β rays, γ

rays, electron beam, neutron radiation, X rays, etc.

The PSAcomposition typically comprises at least some of the monomeric components (possibly a certain species among the monomers or a fraction of its quantity) as a polymer. The polymerization method for forming the polymer is not particularly limited. Heretofore known various polymerization methods can be suitably used. For instance, thermal polymerization (typically carried out in the presence of a thermal polymerization initiator) such as solution polymerization, emulsion polymerization, and bulk polymerization; photopolymerization carried out by irradiating light such as UV light (typically in the presence of a photopolymerization initiator); and active energy ray polymerization carried out by irradiating radioactive rays such as β rays and γ rays. In particular, photopolymerization is preferable. In these polymerization methods, the embodiment of polymerization is not particularly limited. It can be carried out with a suitable selection of a heretofore known monomer supply method, polymerization conditions (temperature, time, pressure, irradiance of light, irradiance of radioactive rays, etc.), and materials (polymerization initiator, surfactant, etc.) used besides the monomers.

For the polymerization, depending on the polymerization method and embodiment of polymerization, etc., a known or commonly used photopolymerization initiator or thermal polymerization initiator can be used. These polymerization initiators can be used singly as one species or in a suitable combination of two or more species.

Examples of the photopolymerization initiator include, but not particularly limited to, ketal-based photopolymerization initiators, acetophenone-based photopolymerization initiators, benzoin ether-based photopolymerization initiators, acylphosphine oxide-based photopolymerization initiators, α-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, and thioxanthone-based photopolymerization initiators.

Specific examples of ketal-based photopolymerization initiators include 2,2-dimethoxy-1,2-diphenylethane-1-one (e.g. trade name "IRGACURE 651" available from BASF Corporation), etc.

Specific examples of acetophenone-based photopolymerization initiators include 1-hydroxycyclohexyl phenyl ketone (e.g. trade name "IRGACURE 184" available from BASF Corporation), 4-phenoxydichloroacetophenone, 4-t-butyl-dichloroacetophenone, 1-[4-(2-hydroxyethoxy)-phenyl]-2-hydroxy-2-methyl-1-propane-1-one (e.g. trade name "IRGACURE 2959" available from BASF Corporation), 2-hydroxy-2-methyl-1-phenylpropane-1-one (e.g. trade name "DAROCUR 1173" available from BASF Corporation), methoxyacetophenone, etc.

Specific examples of benzoin ether-based photopolymerization initiators include benzoin ethers such as benzoin methyl ether, benzoin ethyl ether, benzoin propyl ether, benzoin isopropyl ether, benzoin isobutyl ether, etc., as well as substituted benzoin ethers such as anisole methyl ether, etc.

Specific examples of acylphosphine oxide-based photopolymerization initiators include bis(2,4,6-trimethylbenzoyl)phenylphosphine oxide (e.g. trade name "IRGACURE 819" available from BASF Corporation), bis(2,4,6-trimethylbenzoyl)-2,4-di-n-butoxyphenylphosphine oxide, 2,4,6-trimethylbenzoyldiphenylphosphine oxide (e.g. trade name "LUCIRIN TPO" available from BASF Corporation), bis(2,6-dimethoxybenzoyl)-2,4,4-trimethylpentylphosphine oxide, etc.

Specific examples of α-ketol-based photopolymerization initiators include 2-methyl-2-hydroxypropiophenone, 1-[4-(2-hydroxyethyl)phenyl]-2-methylpropane-1-one, etc. Specific examples of aromatic sulfonyl chloride-based photopolymerization initiators include 2-naphthalenesulfonyl chloride, etc. Specific examples of photoactive oxime-based photopolymerization initiators include 1-phenyl-1,1-propanedione-2-(o-ethoxycarbonyl)-oxime, etc. Specific examples of benzoin-based photopolymerization initiators include benzoin, etc. Specific examples of benzil-based photopolymerization initiators include benzil, etc.

Specific examples of benzophenone-based photopolymerization initiators include benzophenone, benzoylbenzoic acid, 3,3'-dimethyl-4-methoxybenzophenone, polyvinylbenzophenone, α-hydroxycyclohexylphenylketone, etc.

Specific examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, dodecylthioxanthone, etc.

The thermal polymerization initiator is not particularly limited. For example, can be used an azo-based polymerization initiator, peroxide-based polymerization initiator, a redox-based polymerization initiator by combination of a peroxide and a reducing agent, and a substituted ethane-based polymerization initiator. More specific examples include, but not limited to, azo-based initiators such as 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), and 2,2'-azobis[N-(2-carboxyethyl)-2-methylpropionamidine] hydrate; persulfates such as potassium persulfate and ammonium persulfate; peroxide-based initiators such as benzoyl peroxide, t-butyl hydroperoxide, and hydrogen peroxide; substituted ethane-based initiators such as phenyl-substituted ethane; and redox-based initiators such as combination of a persulfate salt and sodium hydrogen sulfite and combination of a peroxide and sodium ascorbate. Thermal polymerization can be preferably carried out at a temperature of, for instance, about 20 °C to 100 °C (typically 40 °C to 80 °C).

Such thermal polymerization initiator or photopolymerization initiator can be used in a usual amount in accordance with the polymerization method and embodiment of polymerization, and there are no particular limitations

to the amount. For instance, relative to 100 parts by weight of monomers to be polymerized, about 0.001 to 5 parts by weight (typically about 0.01 to 2 parts by weight, e.g. about 0.01 to 1 part by weight) of polymerization initiator can be used.

PSA composition comprising polymerized and non-polymerized (unreacted) monomeric components

The PSA composition according to a preferable embodiment comprises a polymerization product of a monomer mixture comprising at least some of the monomeric components (starting monomers) that constitute the composition. Typically, of the monomeric components, some are included as a polymerized product and the rest are included as unreacted monomers. The PSA composition including a polymerized product of the monomers and unreacted monomers can be preferably used as an active energy ray-curable PSA composition. The polymerization product of the monomer mixture can be prepared by polymerizing the monomer mixture at least partially.

The polymerization product is preferably a partially-polymerized product of the monomer mixture. Such a partially-polymerized product is a mixture of a polymer formed from the monomer mixture and unreacted monomers, and is typically in a form of syrup (viscous liquid). Hereinafter, a partially-polymerized product having such a form may be referred to as "monomer syrup" or simply "syrup."

The polymerization method for obtaining the polymerization product from the monomers is not particularly limited. A suitable method can be selected and employed among various polymerization methods as those described earlier. From the standpoint of the efficiency and convenience, a photopolymerization method can be preferably employed. According to a photopolymerization, depending on the polymerization conditions such as irradiation light quantity, etc., the polymer conversion of the monomer mixture can be easily controlled.

With respect to the partially-polymerized product, the monomer conversion of the monomer mixture is not particularly limited. The monomer conversion can be, for instance, about 70 % by weight or lower, or preferably about 60 % by weight or lower. From the standpoint of facile preparation of the PSA composition comprising the partially-polymerized product and ease of application, the monomer conversion is usually suitably about 50 % by weight or lower, or preferably about 40 % by weight or lower (e.g. about 35 % by weight or lower). The lower limit of monomer conversion is not particularly limited. It is typically about 1 % by weight or higher, or usually suitably about 5 % by weight or higher.

The PSA composition comprising a partially-polymerized product of the monomer mixture can be easily obtained, for instance, by partially polymerizing a monomer mixture comprising all the starting monomers in accordance with a suitable polymerization method (e.g. photopolymerization). To the PSA composition comprising the partially-polymerized product, other components (e.g. photopolymerization initiator, polyfunctional monomer(s), crosslinking agent, acrylic oligomer described later, etc.) may be added as necessary. Methods for adding such other components are not particularly limited. For instance, they can be added to the monomer mixture in advance or added to the partially-polymerized product.

The PSA composition disclosed herein may also be in a form where a partially-polymerized product or a fully-polymerized product of a monomer mixture comprising certain species among the monomeric components (starting monomers) is dissolved in the rest of the monomers (unreacted) or a partially-polymerized product thereof. A PSA composition in such a form is also included in examples of the PSAcomposition comprising polymerized and non-polymerized (unreacted) monomeric components. As used herein, the term "fully-polymerized product" refers to a product whose monomer conversion is higher than 95 % by weight.

When forming PSA from a PSA composition comprising polymerized and non-polymerized monomeric components, a photopolymerization method can be preferably employed as the curing method (polymerization method). With respect to a PSA composition comprising a polymerization product prepared by a photopolymerization method, it is particularly preferable to employ photopolymerization as the curing method. A polymerization product obtained by photopolymerization already contains a photopolymerization initiator. When the PSAcomposition comprising the polymerization product is cured to form PSA, the photo-curing can be carried out without any additional photopolymerization initiator. Alternatively, the PSA composition may be obtained by adding a photopolymerization initiator as necessary to the polymerization product prepared by photopolymerization. The additional photopolymerization initiator may be the same as or different from the photopolymerization initiator used in preparing the polymerization product. If the PSAcomposition is prepared by a method other than photopolymerization, a photopolymerization initiator can be added to make it light-curable. The light-curable PSA composition is advantageous as it can readily form even a thick PSA layer. In a preferable embodiment, the PSA composition can be photopolymerized by UV irradiation to form a PSA. The UV irradiation may be performed using a commonly-known high-pressure mercury lamp, low-pressure mercury lamp, or metal halide lamp.

PSA composition comprising monomeric components in a fully-polymerized form

The PSAcomposition according to another preferable embodiment comprises the monomeric components as a fully-polymerized product. Such a PSA composition may be in a form of, for instance, a solvent-based composition which comprises in an organic solvent an acrylic polymer which is the fully-polymerized product of the monomeric components, a

water-dispersed composition such that the acrylic polymer is dispersed in an aqueous solvent, etc.

Crosslinking agent

The PSAcomposition disclosed herein can comprise a crosslinking agent. For the crosslinking agent, a crosslinking agent known or commonly used in the PSA field can be used. Examples include epoxy-based crosslinking agents, isocyanate-based crosslinking agents, silicone-based crosslinking agents, oxazoline-based crosslinking agents, aziridine-based crosslinking agents, silane-based crosslinking agents, alkyletherified melamine-based crosslinking agent, and metal chelate-based crosslinking agent. These can be used singly as one species or in combination of two or more species.

The crosslinking agent content (when two or more species of crosslinking agent are included, their combined amount) is not particularly limited. From the standpoint of obtaining a PSA having well-balanced adhesive properties such as adhesive strength and cohesive strength, the crosslinking agent content is usually preferably about 5 parts by weight or less relative to 100 parts by weight of the monomeric components in the PSA composition, preferably about 0.001 to 5 parts by weight, more preferably about 0.001 to 4 parts by weight, or still more preferably about 0.001 to 3 parts by weight. Alternatively, the PSA composition may be free of such a crosslinking agent.

Acrylic oligomer

From the standpoint of increasing the adhesive strength, etc., the PSA composition disclosed herein can comprise an acrylic oligomer. For the acrylic oligomer, it is preferable to use a polymer having a higher Tg value than the Tg value of the copolymer corresponding to the composition of the monomeric components (which typically, approximately corresponds to the Tg value of the acrylic polymer contained in PSA formed from the PSA composition). The inclusion of the acrylic oligomer can increase the adhesive strength of the PSA.

The acrylic oligomer desirably has a Tg of about 0 °C to about 300 °C, preferably about 20 °C to about 300 °C, or more preferably about 40 °C to about 300 °C. When the Tg falls within these ranges, the adhesive strength can be preferably increased. The Tg value of the acrylic oligomer is determined by the Fox equation, similarly to the Tg of the copolymer corresponding to the composition of the monomeric components.

The acrylic oligomer may have a weight average molecular weight (Mw) of about 1,000 or larger and smaller than about 30,000, preferably about 1,500 or larger and smaller than about 20,000, or more preferably about 2,000 or larger and smaller than about 10,000. A weight average molecular weight within these ranges is preferable in obtaining good adhesive strength and good holding properties. The weight average molecular weight of an acrylic oligomer can be determined by gel permeation chromatography (GPC) as a value based on standard polystyrene. More specifically, it can be determined with HPLC 8020 available from Tosoh Corporation, using two TSKgel GMH-H (20) columns and tetrahydrofuran as an eluent at a flow rate of about 0.5 ml/min.

Examples of monomers forming the acrylic oligomer include alkyl (meth)acrylate such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth) acrylate; an ester of (meth)acrylic acid and an alicyclic alcohol, such as cyclohexyl (meth)acrylate, isobornyl (meth) acrylate, and dicyclopentanyl (meth)acrylate; aryl (meth)acrylate such as phenyl (meth)acrylate and benzyl (meth) acrylate; and a (meth)acrylate derived from a terpene compound derivative alcohol. These (meth)acrylates may be used solely as one species or in combination of two or more species.

From the standpoint of further increasing the adhesiveness, the acrylic oligomer preferably comprises, as a monomer unit, an acrylic monomer having a relatively bulky structure, typified by an alkyl (meth)acrylate having a branched alkyl group, such as isobutyl (meth)acrylate, tert-butyl (meth)acrylate, etc.; an ester of a (meth)acrylic acid and an alicyclic alcohol, such as cyclohexyl (meth)acrylate, isobornyl (meth)acrylate, dicyclopentanyl (meth)acrylate, etc.; or an aryl (meth)acrylate such as phenyl (meth)acrylate, benzyl (meth)acrylate, etc. When UV light is used in synthesizing the acrylic oligomer or forming the PSA layer, a saturated oligomer is preferable because it is less likely to inhibit polymerization. An alkyl (meth)acrylate having a branched alkyl group or an ester of an alicyclic alcohol is preferably used as a monomer constituting the acrylic oligomer.

From these points of view, preferable examples of the acrylic oligomer include the respective homopolymers of dicyclopentanyl methacrylate (DCPMA), cyclohexylmethacrylate (CHMA), isobornyl methacrylate (IBXMA), isobornyl acrylate (IBXA), dicyclopentanyl acrylate (DCPA), 1-adamanthyl methacrylate (ADMA), and 1-adamanthyl acrylate (ADA); as well as a copolymer of CHMA and isobutyl methacrylate (IBMA), a copolymer of CHMA and IBXMA, a copolymer of CHMA and acryloyl morpholine (ACMO), a copolymer of CHMA and diethylacrylamide (DEAA), a copolymer of ADA and methyl methacrylate (MMA), a copolymer of DCPMA and IBXMA, a copolymer of DCPMA and MMA, etc.

The acrylic oligomer content, if any, in the PSA composition is not particularly limited. From the standpoint of increasing the likelihood of obtaining a PSA layer that has a preferable storage modulus disclosed herein, the acrylic oligomer content is preferably about 20 parts by weight or less relative to 100 parts by weight of the monomeric components in the PSA composition, more preferably about 15 parts by weight or less, or even more preferably about 10 parts by weight or less. The art disclosed herein can be implemented preferably also in an embodiment using no acrylic oligomers.

Besides these, the PSA composition disclosed herein may comprise various additives known in the PSA field as necessary. Depending on the application, suitable additives can be added, for example, colorant such as dye and pigment, antistatic agent, surfactant, plasticizer, tackifier resin, surface lubricant, leveling agent, softener, antioxidant, anti-aging agent, photostabilizer, UV absorber, polymerization inhibitor, inorganic or organic filler, meatal in a form of powder, particles or foil, etc.

In the art disclosed herein, as the PSA composition used for forming the PSA layer, an active energy ray-curable PSA composition (typically a light-curing PSA composition) can be preferably used. From the standpoint of the environmental hygiene, a composition essentially free of an organic solvent is preferable. For instance, a PSA composition having about 5 % by weight or less (more preferably about 3 % by weight or less, e.g. about 0.5 % by weight or less) organic solvent content is preferable. A solvent-free PSA composition is preferable because it is suitable for forming a PSA layer by a method where a liquid layer of the PSA composition is cured between the faces A of the first and second films (i.e. at the A-A interface between the first and second films) as described later. As used herein, the solvent-free PSA composition refers to a PSA composition essentially free of a solvent (meaning to include an organic solvent and an aqueous solvent). For instance, a preferable solvent-free PSA composition has a solvent content of about 5 % by weight or less (more preferably about 3 % by weight or less, e.g. about 0.5 % by weight or less). The solvent refers to a volatile component that should be eliminated in the process of forming the PSA layer, that is, a volatile component that is not to be a component of the final PSA layer formed.

## Laminate sheet

The method for producing the laminate sheet disclosed herein is not particularly limited. For instance, the laminate sheet can be obtained by applying the PSA composition to the face A of the first or second film, allowing it to dry or cure to form a PSA layer, and layering the other film on the surface on the reverse side of the face A of the PSA layer. Alternatively, the laminate sheet can also be formed by allowing the PSA composition placed between the faces A of the first and second films to dry or cure to form a PSA layer. The PSA composition can be applied by various known methods. Specific examples include methods such as roll coating, kiss roll coating, gravure coating, reverse coating, roll brush coating, spray coating, dip roll coating, bar coating, knife coating, air knife coating, curtain coating, lip coating, and extrusion coating with a die coater.

The laminate sheet disclosed herein can be preferably produced by a method that includes allowing a liquid layer of the PSA composition on a release face of a release film to dry or cure to form a PSA layer. This method allows more precise control of the smoothness of the PSA layer surface formed in contact with the release face by means of drying or curing a fluid PSA composition (liquid layer) in contact with the release face. As the release film, between the first and second films, the one whose face A is a release face can be used. The release face typically has a maximum protrusion height (Rp) of less than 50 nm. With the use of such release film having a highly smooth release face, highly smooth adhesive faces can be consistently (reproducibly) produced.

The laminate sheet disclosed herein can be preferably produced by a method that includes allowing a liquid layer of the PSA composition to cure between the faces A of the first and second films to form a PSA layer. As the method for placing the liquid layer of the PSA composition between the faces A of the first and second films, it is possible to use a method that applies the fluid PSA composition to the face A of the one film and then covers the liquid layer of the PSA composition with the other film. In another method cited, the first and second films are placed between a pair of rolls, with their faces A facing each other; and the fluid PSA composition is supplied between the faces A (i.e. supplied to the A-A interface). The PSA composition is applied preferably at or below 80 °C, or more preferably at or below 60 °C (e.g. at or below 40 °C). This can inhibit roughening of the PSA layer caused by a difference in coefficient of thermal expansion between the first/second release film and the PSA layer, allowing formation of a yet smoother adhesive face.

The thickness of the PSAlayer is 20 μm or greater and 200 μm or less. In some embodiments, the PSA layer's thickness is, for instance, preferably 25 μm or greater, or possibly even greater than 25 μm. With increasing thickness of the PSA layer, the PSA layer tends to have a higher ability to distribute stress. This can advantageously contribute to reduction of optical distortion. The art disclosed herein can be preferably implemented in an embodiment where the PSA layer has a thickness of, for instance, 30 μm or greater. The PSA layer's thickness can be 35 μm or greater, 40 μm or greater, or even 45 μm or greater. On the other hand, with increasing thickness of the PSA layer, the optical path in the PSA layer increases in length as well; and therefore, optical distortion is more likely to be noticed. Thus, in some embodiments, the PSA layer's thickness is suitably, for instance, possibly 150 μm or less, 100 μm or less, or even 70 μm or less.

In the art disclosed herein, the PSA sheet (which includes the PSA layer and possibly a support substrate, but no release film) that constitutes the laminate sheet preferably has a haze value of 3 % or lower. Such a PSA sheet can be preferably used in various applications including an application that requires transparency. In the laminate sheet roll possibly used in optical applications (e.g. production of optical members), it is particularly significant that the PSA sheet has a haze value of 3 % or lower. In some embodiments, the haze value of the PSA sheet is preferably 0 % to 2.5 %, or more preferably 0 % to 2 %, for instance, possibly 0 % to 1.5 %, or even 0 % to 1 %. The haze value can be measured, using a haze meter, with the PSA sheet of interest applied onto one face of an alkali glass plate. As the haze meter, MR-100 available from Murakami Color Research Laboratory Co., Ltd., or an equivalent device can be used. For the measurement, the alkali glass plate with the PSA sheet applied thereon is arranged so that the PSA sheet is on the light source side. When the alkali glass itself has a haze value, the haze value of the alkali glass by itself is subtracted from the measured value to obtain the haze value of the PSA sheet. As the alkali glass plate, it is possible to use, for instance, a glass slide S1214 available from Matsunami Glass Ind., Ltd.

The haze value of the PSA layer in the laminate sheet disclosed herein is preferably 3 % or lower. The PSA sheet having such a PSA layer (a substrate-free double-faced PSA sheet formed of the PSA layer or a single-faced PSA sheet including the PSA layer and a support substrate layered on the second face of the PSA layer) can be preferably used in various applications including optical applications. In some embodiments, the PSA layer's haze value is preferably 0 % to 2.5 %, more preferably 0 % to 2 %, possibly 0 % to 1.5 %, or even 0 % to 1 %. The art disclosed herein can be preferably implemented in an embodiment where the PSA layer has a haze value of 0 % or higher below 0.5 % (more preferably 0 % or higher and 0.4 % or lower, e.g. 0 % or higher and 0.3 % or lower). The PSA layer's haze value can be determined in the same manner as the PSA sheet's haze value except that the PSA layer of interest is applied to the one face of the alkali glass plate. It is noted that, in the laminate sheet where the first and second films are both release films, the PSA sheet constituting the laminate sheet consists of the PSA layer; and therefore, the PSA sheet's haze value equals the PSA layer's haze value.

The laminate sheet disclosed herein typically has a width of 5 mm or greater, for instance, possibly 10 mm or greater, preferably 20 mm or greater, more preferably 30 mm or greater, yet possibly 50 mm or greater, 150 mm or greater, 300 mm or greater, or even 500 mm or greater. In the laminate sheet roll, with increasing width of the laminate sheet, the occurrence of optical distortion caused by uneven expansion and contraction of the PSA layer tends to be more likely. Thus, it is particularly significant to reduce optical distortion in the PSA layer by applying the art disclosed herein. From the standpoint of the ease of handling, the laminate sheet's width is usually suitably about 5 m or less, for instance, possibly about 4 m or less, about 3 m or less, about 2 m or less, or even about 1 m or less.

The total thickness of the laminate sheet disclosed herein is not particularly limited. It can be, for instance, about 30 μm to 1500 μm. Here, the total thickness of the laminate sheet refers to the thickness from the first film's face B to the second film's face B. In some embodiments, the total thickness of the laminate sheet can be, for instance, 60 μm or greater, 80 μm or greater, 105 μm or greater, 125 μm or greater, or even 140 μm or greater. From the standpoint of the ease of forming a roll and making the laminate sheet longer, in some embodiments, the total thickness of the laminate sheet can be, for instance, 1000 μm or less, 500 μm or less, or even 300 μm or less.

In the laminate sheet disclosed herein, relative to the first face of the PSA layer, the face A of the first film preferably has a shear peel strength $Fs_1$ of 0.5 N/4cm$^2$ or greater and 250 N/4cm$^2$ or less. When the first film's face A has a shear peel strength $Fs_1$ in this range, the effect to limit free expansion and contraction of the PSA layer and suitably reduce the occurrence of optical distortion can be favorably obtained. In some embodiments, from the standpoint of improving the expansion/contraction-limiting effect, the shear peel strength $Fs_1$ of the first film's face A is preferably 1.0 N/4cm$^2$ or greater, more preferably 5.0 N/4cm$^2$ or greater, possibly 10 N/4cm$^2$ or greater, 15 N/4cm$^2$ or greater, 25 N/4cm$^2$ or greater, 35 N/4cm$^2$ or greater, 45 N/4cm$^2$ or greater, or even 55 N/4cm$^2$ or greater. From the standpoint of the ease of peeling during removal of the first film from the PSA layer when using the laminate sheet, etc., in some embodiment, the shear peel strength $Fs_1$ of the first film's face A can be, for instance, 200 N/4cm$^2$ or less, 170 N/4cm$^2$ or less, 150 N/4cm$^2$ or less, 100 N/4cm$^2$ or less, 80 N/4cm$^2$ or less, or even 70 N/4cm$^2$ or less.

In an embodiment where the second film is a release film, relative to the second face of the PSA layer, the face A of the second film preferably has a shear peel strength $Fs_2$ of 0.5 N/4cm$^2$ or greater and 250 N/4cm$^2$ or less from the standpoint of reducing optical distortion of the PSA layer. In some embodiments, for the same reason as the first film, the shear peel strength $Fs_2$ of the second film's face A is preferably 1.0 N/4cm$^2$ or greater, more preferably 5.0 N/4cm$^2$ or greater, possibly 10 N/4cm$^2$ or greater, 15 N/4cm$^2$ or greater; and it can be, for instance, 200 N/4cm$^2$ or less, 170 N/4cm$^2$ or less, 150 N/4cm$^2$ or less, 100 N/4cm$^2$ or less, 80 N/4cm$^2$ or less, or even 70 N/4cm$^2$ or less.

In an embodiment where the second film is a release film, the shear peel strength $Fs_1$ (N/4cm$^2$) of the first film's face A is preferably selected to satisfy $Fs_1 < Fs_2$ in relation to the shear peel strength $Fs_2$ (N/4cm$^2$) of the second film's face A. This can inhibit the second face of the PSA layer from lifting above the second film during removal of the first film from the first face of the PSA layer. In such an embodiment, the shear peel strength $Fs_1$ of the first film's face A is usually suitably 170 N/4cm$^2$ or less, preferably 150 N/4cm$^2$ or less, possibly 100 N/4cm$^2$ or less, 80 N/4cm$^2$ or less, or even 70 N/4cm$^2$ or less. From the standpoint of facilitating peeling of the first film, in some embodiments, the shear peel strength $Fs_1$ can be 55

N/4cm$^2$ or less, 45 N/4cm$^2$ or less, 35 N/4cm$^2$ or less, or even 25 N/4cm$^2$ or less. In this embodiment, the shear peel strength $Fs_2$ of the second film's face A is usually suitably 10 N/4cm$^2$ or greater, possibly 15 N/4cm$^2$ or greater, 30 N/4cm$^2$ or greater, 50 N/4cm$^2$ or greater, or even 70 N/4cm$^2$ or greater.

In an embodiment where the second film is a release film, the shear peel strength $Fs_1$ (N/4cm$^2$) of the first film's face A and the shear peel strength $Fs_2$ (N/4cm$^2$) of the second film's face A are preferably selected to satisfy the next formula 30 N/4cm$^2$ $\leq Fs_1 + Fs_2$. This can favorably bring about the effect to limit free expansion and contraction of the PSA layer and suitably reduce the occurrence of optical distortion. In some embodiments, from the standpoint of enhancing the expansion/contraction-limiting effect, $Fs_1 + Fs_2$ is preferably 50 N/4cm$^2$ or greater, more preferably 70 N/4cm$^2$ or greater, possibly 90 N/4cm$^2$ or greater, or even 100 N/4cm$^2$ or greater. The upper limit of $Fs_1 + Fs_2$ is not particularly limited. It is usually suitably 400 N/4cm$^2$ or less, possibly 300 N/4cm$^2$ or less, or even 250 N/4cm$^2$ or less.

In an embodiment where the second film is a release film, the shear peel strength $Fs_1$ (N/4cm$^2$) of the first film's face A and the shear peel strength $Fs_2$ (N/4cm$^2$) of the second film's face A are preferably selected to satisfy the next formula $0.1 \leq (Fs_2 - Fs_1)/Fs_2$. This can inhibit the second face of the PSA layer from lifting above the second film during removal of the first film from the first face of the PSA layer. From the standpoint of further inhibiting the event, in some embodiments, $(Fs_2 - Fs_1)/Fs_2$ can be, for instance, 0.3 or greater, 0.4 or greater, or even 0.5 or greater. $(Fs_2 - Fs_1)/Fs_2$ is usually suitably 1.0 or less, possibly 0.9 or less, or even 0.9 or less.

The shear peel strength $Fs_1$ and $Fs_2$ are determined by the method described later in Examples. The shear peel strength $Fs_1$ and $Fs_2$ can be adjusted through selection of the PSAlayer-forming PSA (e.g. Tg of base polymer, monomer composition, etc.), selection of the constitution of the release film's face A of interest (e.g. type of release agent, thickness of release layer, etc.) and so on.

Roll

The matters disclosed by the present description include a roll comprising a laminate sheet disclosed herein in a wound form. The roll typically includes a core (roll core) and a laminate sheet wound around the core. The shape of the core is not particularly limited. For instance, it may have a solid cylindrical shape, a hollow cylindrical shape (i.e. a tubular shape), a hollow or solid polygonal shape, etc. From the standpoint of facilitating the handling of the roll, a hollow cylindrical core or a hollow polygonal core can be preferably used. A cylindrical core is particularly preferable.

The material forming the core is not particularly limited and a known material can be used. Examples include paper such as cardboard; plastic materials such as PE resin, PP resin, vinyl chloride resin, polyester, epoxy resin, phenol resin, melamine resin, silicon resin, polyurethane, polycarbonate, and acrylonitrile-butadiene-styrene copolymer resin (ABS resin); composite materials such as fiber-reinforced plastic (FRP); and metal materials such as iron, stainless steel (SUS) and aluminum.

The core's outer diameter is not particularly limited. In some embodiments, the core may have an outer diameter of, for instance, 30 mm or greater, 50 mm or greater, 70 mm or greater, 80 mm or greater, or even 85 mm or greater. With increasing outer diameter of the core, it tends to be easier to reduce formation of open pores on the adhesive face as well as uneven expansion and contraction of the PSA layer caused by deformation of the laminate sheet in association with winding and unwinding. On the other hand, in order to increase the productivity, etc., it is normally desirable to make the laminate sheet longer so as to reduce the frequency the rolls need to be replaced. To include a longer laminate sheet in the roll, it is advantageous that the core has a smaller outer diameter. From such a standpoint, for instance, the core's outer diameter is preferably 300 mm or less, or it can be 250 mm or less, 200 mm or less, or even 180 mm or less. The art disclosed herein can be favorably implemented even in an embodiment of the roll having a core's outer diameter of 150 mm or less, 100 mm or less, or even 95 mm or less. Even in such an embodiment, the resulting laminate sheet can have a PSA layer with great optical homogeneity. When the roll core has a non-circular cross-sectional shape, the diameter of the core refers to the diameter of a circle approximating the cross-sectional shape.

In case of a hollow core, the wall thickness of the core is not particularly limited. It can be suitably selected so as to obtain desirable strength, considering the material and outer diameter of the core. From the standpoint of reducing the weight of the roll, the wall thickness of the core is usually suitably about 2 mm to 15 mm, or preferably about 3 mm to 10 mm.

Applications

For this feature, the laminate sheet can be preferably used in, for instance, optical applications. More specifically, the laminate sheet can be suitably used for manufacturing optical members having PSA layers (adhesive optical members), in an embodiment where the PSA sheet in the laminate sheet is applied to the optical members. The laminate sheet can be preferably used as an adhesive optical member, with the PSA sheet in the laminate as is or after processed into suitable size and shape, in an embodiment where the second film is a support substrate having a non-releasable face A and the support substrate is an optical member.

When using an optical film as the optical material, the adhesive optical member is used as an adhesive optical

film. Examples of the optical film include a polarizing plate, retardation plate, optical compensation film, brightness enhancement film, hard coat (HC) film, anti-glare film, impact-absorbing film, anti-fouling film, photochromic film, light control film, wavelength-selective absorbing film, wavelength conversion film, and a laminate of these. The PSA layer or PSA sheet in the laminate sheet disclosed herein is preferable also for applications in the ophthalmic field. The PSA layer or PSA sheet is not limited to optical applications or ophthalmic applications as described above. For instance, it can be applied for various purposes, in a form of a PSA sheet that uses a general antifouling film, thermal insulation film, and impact-absorbing film as the support.

The matters disclosed in this description include the following:

(1) A laminate sheet comprising a PSA layer as well as first and second films laminated on first and second faces of the PSA layer, wherein

the first film is a release film having a face A in contact with the PSA layer, with the face Abeing a release face,
the face A of the first film has a maximum protrusion height $Rp_{1A}$ of less than 50 nm,
the first and second films have a combined thickness $T_{SUM}$ of 80 $\mu$m or greater, and
the thickness of the PSA layer is 20 $\mu$m or greater and 200 $\mu$m or less.

(2) The laminate sheet according to (1) above, wherein the PSA layer is formed from an active energy ray curable PSAcomposition (e.g. a photocurable PSA composition).
(3) The laminate sheet according to (1) or (2) above, wherein at least one (preferably each) of the first and second films satisfies the next formula 0.10 (N•mm) < $E' \times T^3$ with respect to the relationship between thickness T (mm) and elastic modulus E' (MPa).
(4) The laminate sheet according to any of (1) to (3) above, wherein each of the first and second films is independently selected from the group consisting of polyester-based resin film, cellulose resin film, polyimide-based resin film and polyether sulfone-based resin film.
(5) The laminate sheet according to any of (1) to (4) above, wherein at least one (preferably each) of the first and second films has a thickness of 25 $\mu$m or greater (preferably 35 $\mu$m or greater, more preferably 50 $\mu$m or greater, or yet more preferably 70 $\mu$m or greater).
(6) The laminate sheet according to any of (1) to (5) above, wherein the face A of the first film has a rate of retained adhesion of 60 % or higher.
(7) The laminate sheet according to any of (1) to (6) above, wherein the face A of the first film has a shear peel strength $F_{S1}$ of 0.5 N/4cm$^2$ or greater and 250 N/4cm$^2$ or less relative to the first face of the PSA layer.
(8) The laminate sheet according to any of (1) to (7) above, wherein the second film has a face A in contact with the PSA layer, the face A having a maximum protrusion height $Rp_{2A}$ of less than 50 nm.
(9) The laminate sheet according to any of (1) to (8) above, wherein the second film is a release film whose face Ais a release face.
(10) The laminate sheet according to (9) above, wherein the face A of the second film has a rate of retained adhesion of 60 % or higher.
(11) The laminate sheet according to (9) or (10) above, wherein the face A of the second film has a shear peel strength $Fs_2$ of 0.5 N/4cm$^2$ or greater and 250 N/4cm$^2$ or less relative to the second face of the PSA layer.
(12) The laminate sheet according to any of (9) to (11) above, wherein the shear peel strength $Fs_1$ (N/4cm$^2$) of the face A of the first film relative to the first face of the PSA layer and the shear peel strength $Fs_2$ (N/4cm$^2$) of the face A of the second film relative to the second face of the PSA layer has a relationship that satisfies the next formula $0.1 \leq (Fs_2 - Fs_1)/Fs_2$.
(13) The laminate sheet according to any of (1) to (12) above, wherein, in at least the first or second film, the face A has a maximum protrusion height Rp of 20 nm or greater below 50 nm, 20 nm or greater and 40 nm or less, or 20 nm or greater and 30 nm or less, with the face Abeing a release face treated with a silicone-based release agent.
(14) The laminate sheet according to any of (1) to (13) above, wherein, in at least the first or second film, the face A has a maximum protrusion height Rp of 20 nm or greater below 50 nm, 20 nm or greater and 40 nm or less, or 20 nm or greater and 30 nm or less, with the face Abeing a release face treated with a long-chain alkyl-based release agent.
(15) The laminate sheet according to any of (1) to (13) above, wherein, in at least the first or second film, the face A has a maximum protrusion height Rp of 5 nm or greater below 50 nm, 5 nm or greater and 30 nm or less, 5 nm or greater below 25 nm, 10 nm or greater below 25 nm, 15 nm or greater below 30 nm, or 15 nm or greater below 25 nm, with the face Abeing a release face treated with a long-chain alkyl-based release agent.
(16) The laminate sheet according to any of (1) to (15) above, wherein, in at least the first or second film, the face Ais a release face treated with a silicone-based release agent and the release face has a rate of retained adhesion of 60 % or higher.
(17) The laminate sheet according to any of (1) to (16) above, wherein the PSA layer has a monolayer structure and

free of a substrate.

(18) The laminate sheet according to any of (1) to (17) above, wherein the PSA sheet that is the laminate sheet excluding the release film has a haze value of 3 % or lower.

(19) The laminate sheet according to any of (1) to (18) above wherein the PSA layer is formed with an acrylic PSA.

(20) The laminate sheet according to any of (1) to (19) above, for use in producing an optical member having the PSA layer.

(21) The laminate sheet according to any of (1) to (20) above, that is wound in a roll.

## EXAMPLES

Several working examples related to the present invention are described below, but the present invention is not to be limited to these examples. In the description below, "part(s)" and "%" are by weight unless otherwise specified.

### Preparation of PSA Composition

(PSA composition C1)

Were mixed 39 parts of n-butyl acrylate, 40 parts of cyclohexyl acrylate, 21 parts of 4-hydroxybutyl acrylate, and 0.05 part of 2,2-dimethoxy-1,2-diphenylethane-1-one (available from IGM Resins, trade name OMNIRAD 651) and 0.05 part of 1-hydroxycyclohexyl phenyl ketone (available from IGM Resins, trade name OMNIRAD 184) as photopolymerization initiators. The mixture was irradiated with UV rays in a nitrogen atmosphere to prepare a partially-polymerized product (monomer syrup). To the resulting monomer syrup, 0.5 part by weight of 1,6-hexanediol diacrylate was added and evenly mixed to prepare a PSA composition C1.

(PSA composition C2)

Were mixed 70 parts of 2-ethylhexyl acrylate, 10 parts of N-vinylpyrrolidone, 20 parts of 4-hydroxybutyl acrylate, 0.05 part of 2,2-dimethoxy-1,2-diphenylethane-1-on (available from IGM Resins, product name OMNIRAD 651) and 0.05 part of 1-hydroxycyclohexyl phenyl ketone (available from IGM Resins, product name OMNIRAD 184) as photopolymerization initiators. The resulting mixture was subjected to UV radiation in a nitrogen atmosphere to prepare a partially-polymerized product (monomer syrup). To the resulting monomer syrup, was added and uniformly mixed 0.2 part of 1,6-hexanediol diacrylate to prepare a PSAcomposition C2.

### Preparation of laminate sheet

Example 1

As the first film, was obtained a 75 μm thick PET film (release film) whose face A to be laminated on the PSA layer's first face was a release face formed with a silicone-based release agent S1 with the face A having a maximum protrusion height $Rp_{1A}$ of 26 nm. The PET film had an $E' \times T^3$ value of 0.99 N •mm determined from the film's elastic modulus E' (MPa) and thickness T (0.075 mm).

As the second film, was obtained a 75 μm thick PET film (release film) whose face A to be laminated on the PSA layer's second face was a release face formed with a silicone-based release agent with the face A having a maximum protrusion height $Rp_{2A}$ of 23 nm. The PET film had an $E' \times T^3$ value of 0.99 N•mm.

To the first film's face A, was applied PSA composition C1 to form a liquid layer of PSA composition C1 on the face A. The PSA composition was applied in an amount adjusted so that the PSA layer had a final thickness of 50 μm. Subsequently, the liquid layer was covered with the second film so that the second film's face A (release face) made contact with the liquid layer. By this, the liquid layer was blocked from oxygen. With the each face of the liquid layer of the PSA composition in contact with the face A of the first or second film, the resultant was irradiated with UV rays at an irradiance of 5 mW/cm$^2$ for 360 seconds using a chemical light lamp (available by Toshiba Corporation) to carry out polymerization and cure the liquid layer to form a PSA layer. A three-layer laminate sheet was thus obtained, formed of the PSA layer (i.e. the UVcured product of the liquid layer) and first and second films laminated on first and second faces of the PSA layer.

The irradiance value was measured with an industrial UV checker (available from Topcon Corporation, trade name "UVR-T1" with light detector model number "UD-T36") with peak sensitivity at 350 nm in wavelength.

Example 2

Using PSA composition C2 in place of PSA composition C 1, but otherwise in the same manner as Example 1,

was obtained a laminate sheet.

Example 3

As the first film, was obtained a PET film having the thickness and $Rp_{1A}$ shown in Table 1, with the face Abeing a release face treated with long-chain alkyl-based release agent A1 (the surface of an approximately 300 nm thick release layer formed with release agent A1). As the second film, was obtained a PET film having the thickness and $Rp_{2A}$ shown in Table 1, with the face Abeing a release face treated with long-chain alkyl-based release agent A1 (the surface of an approximately 100 nm thick release layer formed with release agent A1). Using these first and second films, but otherwise in the same manner as Example 1, was obtained a laminate sheet.

Example 4

As the first film, was obtained a PET film having the thickness and $Rp_{1A}$ shown in Table 1, with the face Abeing a release face treated with silicone-based release agent S2. As the second film, was obtained a PET film having the thickness and $Rp_{2A}$ shown in Table 1, with the face Abeing a release face treated with silicone-based release agent S3. Using these first and second films, but otherwise in the same manner as Example 1, was obtained a laminate sheet.

Example 5

As the first film, was obtained a PET film having the thickness and $Rp_{1A}$ shown in Table 1, with the face Abeing a release face treated with silicone-based release agent S2. As the second film, was obtained a PET film having the thickness and $Rp_{2A}$ shown in Table 1, with the face Abeing a release face treated with silicone-based release agent S3. Using these first and second films, but otherwise in the same manner as Example 1, was obtained a laminate sheet.

Example 6

As the first film, was obtained a PET film having the thickness and $Rp_{1A}$ shown in Table 1, with the face Abeing a release face treated with silicone-based release agent S1. As the second film, was obtained a PET film having the thickness and $Rp_{2A}$ shown in Table 1, with the face Abeing a release face treated with silicone-based release agent S2. Using these first and second films, but otherwise in the same manner as Example 1, was obtained a laminate sheet.

Example 7

As the first film, was obtained a PET film having the thickness and $Rp_{1A}$ shown in Table 1, with the face Abeing a release face treated with silicone-based release agent S2. As the second film, was obtained a PET film having the thickness and $Rp_{2A}$ shown in Table 1, with the face Abeing a release face treated with silicone-based release agent S3. Using these first and second films, but otherwise in the same manner as Example 1, was obtained a laminate sheet.

Example 8

As the first film, was obtained a PET film having the thickness and $Rp_{1A}$ shown in Table 1, with the face Abeing a release face treated with silicone-based release agent S1. As the second film, was obtained a PET film having the thickness and $Rp_{2A}$ shown in Table 1, with the face Abeing a release face treated with silicone-based release agent S2. Using these first and second films, but otherwise in the same manner as Example 1, was obtained a laminate sheet.

As the silicone-based release agent S1, was used a 0.3 % solution of 100 parts of silicone-based release agent (KS-847H available from Shin-Etsu Chemical Co., Ltd.) and 3.3 parts of silicone curing catalyst (CAT-PL-50T available from Shin-Etsu Chemical Co., Ltd.) prepared by dilution with a solvent mixture (1:2:1 weight ratio) of toluene (available from Idemitsu Petrochemical Co., Ltd.), n-hexane (available from Maruzen Petrochemical Co., Ltd.) and methyl ethyl ketone (Idemitsu Kosan Co., Ltd.).

As the silicone-based release agent S2, was used a mixture of 92 parts of vinyl group-containing silicone-based release agent (KS-3703 available from Shin-Etsu Chemical Co., Ltd.), 8 parts of release-controlling agent (KS-3800 available from Shin-Etsu Chemical Co., Ltd.) and 3 parts of platinum catalyst (CAT-PL-50T available from Shin-Etsu Chemical Co., Ltd.) with 680 parts of toluene and 680 parts of n-hexane as diluents.

As the silicone-based release agent S3, was used a mixture of 80 parts of vinyl group-containing silicone-based release agent (KS-3703 available from Shin-Etsu Chemical Co., Ltd.), 20 parts of release-controlling agent (KS-3800 available from Shin-Etsu Chemical Co., Ltd.) and 3 parts of platinum catalyst (CAT-PL-50T available from Shin-Etsu Chemical Co., Ltd.) with 680 parts of toluene and 680 parts of n-hexane as diluents.

As the long-chain alkyl-based release agent A1, was used a 0.3 % aqueous solution prepared as follows: 200 parts of xylene (available from Taiyo-Chemicals Co., Ltd.; xylol) and 600 parts of octadecyl isocyanate (available from Ohara Palladium Chemical Co., Ltd.; R-NCO) were heated while stirring. When xylene started refluxing, was added portion-wise 100 parts of polyvinyl alcohol (available from Kuraray, KURARAY POVAL 205) at 10-minute intervals over 2 hours. After the addition was completed, the mixture was allowed to reflux for 2 more hours. Subsequently, the reaction mixture was added to methanol to precipitate out the reaction product as a white precipitate. The precipitate was separated by filtration; to this, was added 140 parts of xylene; the resultant was heated to complete dissolution; and methanol was added again to obtain a precipitate. After this procedure was repeated a few times, the precipitate was washed with methanol, allowed to dry, pulverized and diluted with water.

The first and second films used in Examples 1, 2 and 4 to 8 were prepared as follows: Using a bar coater, one face (subject to treatment) of PET film as the liner substrate was coated with the prescribed release agent to a dried thickness of 80 nm to 150 nm (e.g. about 120 nm), dried at 120 °C for one minute and aged at 50 °C for 24 hours. The coating amount of release agent was suitably adjusted to obtain desired release properties.

The first and second films used in Example 3 were prepared as follows: Using a bar coater, one face (subject to treatment) of PET film as the liner substrate was coated with the prescribed release agent to a dried thickness of about 300 nm for the first film and to a dried thickness of about 100 nm for the second film, dried at 120 °C for one minute and aged at 50 °C for 24 hours.

With respect to the first and second films used in the respective Examples, the face A's maximum protrusion heights $Rp_{1A}$ and $Rp_{2A}$ were determined based on JIS B 0601:2001, using a contact surface roughness tester SV3100S4 available from Mitutoyo Corporation. As the cut-off value (reference length), in accordance with the arithmetic mean height Ra estimated for the surface subject to measurement, was used 0.08 mm when $Ra \leq 0.02$ μm, 0.25 mm when 0.02 μm < Ra ≤ 0.1 μm, or 0.8 mm when 0.1 μm < Ra ≤ 2 μm (all Ra estimated).

For a surface of interest, the arithmetic mean height Ra can be estimated by measuring the arithmetic mean height Ra of the surface of interest using a non-contact surface roughness analyzer. As the non-contact surface roughness analyzer, an optical interferometric surface roughness analyzer (e.g. Wyko NT-9100 available from Veeco Instruments, Inc. or a similar system) can be used. As the arithmetic mean height Ra values estimated with respect to the faces A of the first and second films used in the respective Examples, were used the values obtained using Veeco's Wyko NT-9100 under the following measurement conditions:

- Surface area measure per run: 622 μm ×467 μm
  (Object lens: ×10, FOV (internal lens): ×1.0)
- Measurement mode: VSI (vertical scan interferometry)
- Back scan: 5 μm
- Distance measured: 10 μm
- Threshold: 0.1 %
- Scanning speed: × 1 (single scan)

Measurement of shear peel strength

The resulting laminate sheet was cut to a 20 mm wide, 200 mm long size. From this, was removed the release film in contact with the adhesive face on the reverse side of the release film subject to measurement. To the exposed adhesive face, was adhered 50 μm thick PET film as a backing material to obtain a sample for shear peel strength testing. At 90 mm from one end of the length direction, the sample was half-cut from the backing material side to cut the backing material and the PSA layer. From the one end of the length direction up to the 90 mm line, the backing material and the PSA layer were removed from the release film subject to measurement. Subsequently, at 110 mm from one end of the sample's length direction, the sample was half-cut from the side of the release film subject to measurement to cut only the release film of interest. Using a tensile tester (model name TENSILON available from Shimadzu Corporation), at a peel angle of 0° and a tensile speed of 10 mm/min, a tensile test was carried out; while the release film of interest (cut at the 110 mm line from the one end of the length direction) was peeled from the PSA layer, the peel strength was monitored and the maximum peel strength value observed was recorded as the shear peel strength ($N/4cm^2$). It is noted that in an embodiment where the second film is a support substrate, the support substrate can be used as the backing material and the shear peel strength can be determined relative to the adhesive face of the first film. In an embodiment where the first and second films are both release films, when the shear peel strength of the release film in contact with the adhesive face on the reverse side of the release film subject to measurement is clearly higher than the shear peel strength of the release film subject to measurement, the adhesion of the backing material can be omitted.

Preparation of laminate sheet roll

The laminate sheet according to each Example was prepared, using long strips of 1000 mm wide film as the first and second films and applying the PSA composition to a central area (about 930 mm wide) of the first film's width. With respect to the laminate sheet according to each Example, the lengthwise edges (two edges of the width) were cut off within the width of the PSA layer formed from the PSA composition to prepare a 300 mm wide and about 30 m long sample for roll preparation.

Was obtained a cylindrical core of 90.2 mm in outer circumference, 76.2 mm in inner circumference and 305 mm in core length. One end (start end of winding) of the length of each sample for roll preparation was fixed with a commercial PSA tape to the lateral area of the core with the second film side of the sample on the inside; and the rest of the sample was wound around the core at a winding tension of about 200 N/m to prepare a roll. The other end (finish end of winding) of the sample's length was fixed with a commercial PSA tape to the sample's outer surface (first film's face B) located at the inner circumference.

Optical distortion

After the roll prepared above was stored in a room at 30 °C for 28 days, the sample for roll preparation was cut around 10 m from the start end of winding to a 300 mm by 1000 mm size to obtain an optical distortion test sample.

The sample (laminate sheet having a first film/PSAlayer/second film structure) was held flat and placed between a point light source and a screen at an angle of approximately 45° relative to the light beam from the point light source with the sample's second film side on the point light source side. As the point light source, was used a xenon lamp C2577 available from Hamamatsu Photonics K.K. The distance between the point light source and the screen was about 100 cm. The sample was placed around the midpoint of the distance.

The point light source was turned on and the image projected through the sample on the screen was visually inspected to evaluate the presence and degree of optical distortion based on the three grades described below. The results are shown in Table 1. The optical distortion was evaluated in an environment at 23 °C and 50 %RH at about 5 minutes after the optical distortion test sample was collected from the poststorage roll.

E: No optical distortion observed
G: Some optical distortion observed, but an acceptable level for practical use
P: Obvious optical distortion observed

Surface smoothness

In the optical distortion test, the first film was removed from the sample to expose the adhesive face; the exposed adhesive face and the image projected on the screen were visually inspected and the smoothness of the surface (first adhesive face) of the PSA layer was graded based on the following three-level scale:

E: smooth surface with no open pores (excellent surface smoothness)
G: formation of a few open pores observed, but an acceptable level for practical use
P: formation of open pores observed (poor surface smoothness)

[Table 1]

Table 1

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| 1st film | Thickness | 75 μm | 75 μm | 50 μm | 75 μm | 75 μm | 38 μm | 31 μm | 38 μm |
| | Rp of face A ($R_{P1A}$) | 26 nm | 26 nm | 17 nm | 33 nm | 39 nm | 141 nm | 16 nm | 141 nm |
| | E' × $T^3$ (N mm) | 0.99 | 0.99 | 0.29 | 0.99 | 0.99 | 0.13 | 0.07 | 0.13 |
| | Shear peel strength $F_{S1}$ (N/4cm$^2$) | 19.6 | 37.3 | 62.3 | 33.4 | 38.9 | 19.3 | 40.4 | 19.3 |

(continued)

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| 2nd film | Thickness | 75 μm | 75 μm | 50 μm | 75 μm | 75 μm | 38 μm | 31 μm | 50 μm |
| | Rp of face A ($R_{P2A}$) | 23 nm | 23 nm | 18 nm | 36 nm | 43 nm | 138 nm | 18 nm | 309 nm |
| | $E' \times T^3$ (N mm) | 0.99 | 0.99 | 0.29 | 0.99 | 0.99 | 0.13 | 0.07 | 0.29 |
| | Shear peel strength $F_{S2}$ ($N/4cm^2$) | 98 | 111.5 | 150.1 | 75.2 | 84.8 | 31.2 | 92.5 | 46.2 |
| Combined thickness of films, $T_{SUM}$ | | 150 μm | 150 μm | 100 μm | 150 μm | 150 μm | 76 μm | 62 μm | 88 μm |
| Evaluation | Surface smoothness | E | E | E | G | G | P | E | P |
| | Opitical homogeneity | E | E | E | E | E | P | P | G |

As shown in Table 1, the laminate sheets of Examples 1 to 5 with $Rp_{1A}$ < 50 nm and $T_{SUM} \geq 80$ μm (combined thickness of first and second films) had good optical homogeneity with highly smooth surfaces and little optical distortion. With respect to Examples 1 to 3 with $Rp_{1A} \leq 30$ nm, the resulting surfaces were especially smooth. On the other hand, with respect to Examples 6 and 8 with large $Rp_{1A}$ values, the resulting surfaces were not sufficiently smooth; and as for Examples 6 and 7 with $T_{SUM}$ below 80 μm, optical distortion was observed regardless of their $Rp_{1A}$ values.

Although specific embodiments of the present invention have been described in detail above, these are merely for illustrations and do not limit the scope of the claims.

## Claims

**1.** A laminate sheet comprising a pressure-sensitive adhesive layer, a first film laminated on a first face of the pressure-sensitive adhesive layer, and a second film laminated on a second face of the pressure-sensitive adhesive layer, wherein

the first film is a release film having a face A in contact with the pressure-sensitive adhesive layer, with the face A being a release face,
the face A of the first film has a maximum protrusion height $Rp_{1A}$ of less than 50 nm,
the first and second films have a combined thickness $T_{SUM}$ of 80 μm or greater, and
the thickness of the pressure-sensitive adhesive layer is 20 μm or greater and 200 μm or less,
wherein the maximum protrusion height is determined based on JIS B 0601:2001, using a contact surface roughness analyzer.

**2.** The laminate sheet according to Claim 1, wherein the pressure-sensitive adhesive layer is formed from an active energy ray curable pressure-sensitive adhesive composition.

**3.** The laminate sheet according to Claim 1 or 2, wherein at least one between the first and second films has a thickness T (mm) and an elastic modulus E' (MPa) satisfying the next formula 0.10 (N • mm) < $E' \times T^3$,
wherein the elastic modulus is determined in a temperature range of 0 °C to 100 °C, using a dynamic viscoelastometer in a tension mode, at a chuck distance of 23 mm at a heating rate of 10 °C/min at a frequency of 1 Hz at 0.05% strain.

**4.** The laminate sheet according to any one of Claims 1 to 3, wherein at least one of the first and second films has a thickness of 25 μm or greater.

**5.** The laminate sheet according to any one of Claims 1 to 4, wherein the face A of the first film has a shear peel strength Fsi of 0.5 $N/4cm^2$ or greater and 250 $N/4cm^2$ or less relative to the first face of the pressure-sensitive adhesive layer, wherein the shear peel strength is determined using a tensile tester at a peel angle of 0° and a tensile speed of 10 mm/min.

6. The laminate sheet according to any one of Claims 1 to 5, wherein the second film has a face A in contact with the pressure-sensitive adhesive layer, the face A having a maximum protrusion height $Rp_{2A}$ of less than 50 nm, wherein the maximum protrusion height is determined based on JIS B 0601:2001, using a contact surface roughness analyzer.

7. The laminate sheet according to Claim 6, wherein the second film is a release film whose face A is a release face.

8. The laminate sheet according to Claim 7, wherein the face A of the second film has a shear peel strength $Fs_2$ of 0.5 $N/4cm^2$ or greater and 250 $N/4cm^2$ or less relative to the second face of the pressure-sensitive adhesive layer, wherein the shear peel strength is determined using a tensile tester at a peel angle of 0° and a tensile speed of 10 mm/min.

9. The laminate sheet according to Claim 7 or 8, wherein the shear peel strength Fsi ($N/4cm^2$) of the face A of the first film relative to the first face of the pressure-sensitive adhesive layer and the shear peel strength $F_{S2}$ ($N/4cm^2$) of the face A of the second film relative to the second face of the pressure-sensitive adhesive layer has a relationship that satisfies the next formula $0.1 \leq (Fs_2 - Fs_1)/Fs_2$.

10. The laminate sheet according to any one of Claims 6 to 9, wherein, in at least the first or second film, the face A has a maximum protrusion height Rp of 20 nm or greater below 50 nm with the face A being a release face treated with a silicone-based release agent,
wherein the maximum protrusion height is determined based on JIS B 0601:2001, using a contact surface roughness analyzer.

11. The laminate sheet according to any one of Claims 6 to 9, wherein, in at least the first or second film, the face A has a maximum protrusion height Rp of 20 nm or greater below 50 nm with the face A being a release face treated with a long-chain alkyl-based release agent,
wherein the maximum protrusion height is determined based on JIS B 0601:2001, using a contact surface roughness analyzer.

12. The laminate sheet according to any one of Claims 6 to 9, wherein, in at least the first or second film, the face A has a maximum protrusion height Rp of 5 nm or greater below 50 nm with the face A being a release face treated with a long-chain alkyl-based release agent,
wherein the maximum protrusion height is determined based on JIS B 0601:2001, using a contact surface roughness analyzer.

13. The laminate sheet according to any one of Claims 6 to 10, wherein, in at least the first or second film, the face A is a release face treated with a silicone-based release agent and the release face has a rate of retained adhesion of 60 % or higher.

14. The laminate sheet according to any one of Claims 1 to 13, wherein the pressure-sensitive adhesive layer is formed with an acrylic pressure-sensitive adhesive.

15. Use of the laminate sheet according to any one of Claims 1 to 14 in producing an optical member having the pressure-sensitive adhesive layer.

**Patentansprüche**

1. Laminatfolie, umfassend eine druckempfindliche Haftmittelschicht, einen ersten Film, der auf einer ersten Fläche der druckempfindlichen Haftmittelschicht laminiert ist, und einen zweiten Film, der auf einer zweiten Fläche der druckempfindlichen Haftmittelschicht laminiert ist, wobei

der erste Film ein Trennfilm ist, der eine Fläche A in Kontakt mit der druckempfindlichen Haftmittelschicht hat, wobei die Fläche A eine Trennfläche ist,
die Fläche A des ersten Films eine maximale Vorsprungshöhe $Rp_{1A}$ von weniger als 50 nm aufweist,
der erste und der zweite Film eine kombinierte Dicke $T_{SUM}$ von 80 μm oder mehr haben und
die Dicke der druckempfindlichen Haftmittelschicht 20 μm oder mehr und 200 μm oder weniger beträgt,
wobei die maximale Vorsprungshöhe auf Basis von JIS B 0601:2001 unter Verwendung eines Kontaktoberflächen-Rauheitsanalysators bestimmt wird.

2. Laminatfolie nach Anspruch 1, wobei die druckempfindliche Haftmittelschicht aus einer druckempfindlichen Haftmittelzusammensetzung gebildet ist, die durch aktive Energiestrahlen härtbar ist.

3. Laminatfolie nach Anspruch 1 oder 2, wobei mindestens einer der ersten und zweiten Filme eine Dicke T (mm) und einen Elastizitätsmodul E' (MPa) aufweist, welche die folgende Formel 0,10 (N • mm) < E' $\times$ $T^3$ erfüllen,
wobei der Elastizitätsmodul in einem Temperaturbereich von 0 °C bis 100 °C unter Verwendung eines dynamischen Viskoelastometers in einem Zugmodus bei einer Einspanndistanz von 23 mm bei einer Erwärmungsrate von 10 °C/min bei einer Frequenz von 1 Hz bei 0,05 % Dehnung bestimmt wird.

4. Laminatfolie nach einem der Ansprüche 1 bis 3, wobei mindestens einer der ersten und zweiten Filme eine Dicke von 25 $\mu$m oder mehr aufweist.

5. Laminatfolie nach einem der Ansprüche 1 bis 4, wobei die Fläche A des ersten Films eine Scherschälfestigkeit $F_{S1}$ von 0,5 N/4cm$^2$ oder mehr und 250 N/4cm$^2$ oder weniger relativ zur ersten Fläche der druckempfindlichen Haftmittelschicht aufweist,
wobei die Scherschälfestigkeit unter Verwendung einer Zugprüfgeräts bei einem Schälwinkel von 0° und einer Zuggeschwindigkeit von 10 mm/min bestimmt wird.

6. Laminatfolie nach einem der Ansprüche 1 bis 5, wobei der zweite Film eine Fläche A in Kontakt mit der druckempfindlichen Haftmittelschicht aufweist, wobei die Fläche A eine maximale Vorsprungshöhe $Rp_{2A}$ von weniger als 50 nm aufweist,
wobei die maximale Vorsprungshöhe auf Basis von JIS B 0601:2001 unter Verwendung eines Kontaktoberflächen-Rauheitsanalysators bestimmt wird.

7. Laminatfolie nach Anspruch 6, wobei der zweite Film ein Trennfilm ist, dessen Fläche A eine Trennfläche ist.

8. Laminatfolie nach Anspruch 7, wobei die Fläche A des zweiten Films eine Scherschälfestigkeit $Fs_2$ von 0,5 N/4cm$^2$ oder mehr und 250 N/4cm$^2$ oder weniger relativ zur zweiten Fläche der druckempfindlichen Haftmittelschicht aufweist, wobei die Scherschälfestigkeit unter Verwendung eines Zugprüfgeräts bei einem Schälwinkel von 0° und einer Zuggeschwindigkeit von 10 mm/min bestimmt wird.

9. Laminatfolie nach Anspruch 7 oder 8, wobei die Scherschälfestigkeit Fsi (N/4cm$^2$) der Fläche A des ersten Films relativ zur ersten Fläche der druckempfindlichen Haftmittelschicht und die Scherschälfestigkeit $F_{S2}$ (N/4cm$^2$) der Fläche A des zweiten Films relativ zur zweiten Fläche der druckempfindlichen Haftmittelschicht in einer Beziehung stehen, welche die folgende Formel erfüllt: $0,1 \leq (Fs_2 - Fs_1)/Fs_2$.

10. Laminatfolie nach einem der Ansprüche 6 bis 9, wobei zumindest in dem ersten oder zweiten Film die Fläche A eine maximale Vorsprungshöhe Rp von 20 nm oder mehr unter 50 nm aufweist, wobei die Fläche A eine Trennfläche ist, die mit einem Trennmittel auf Silikonbasis behandelt ist,
wobei die maximale Vorsprungshöhe auf Basis von JIS B 0601:2001 unter Verwendung eines Kontaktoberflächen-Rauheitsanalysators bestimmt wird.

11. Laminatfolie nach einem der Ansprüche 6 bis 9, wobei zumindest in dem ersten oder zweiten Film die Fläche A eine maximale Vorsprungshöhe Rp von 20 nm oder mehr unter 50 nm aufweist, wobei die Fläche A eine Trennfläche ist, die mit einem Trennmittel auf Basis von langkettigem Alkyl behandelt ist,
wobei die maximale Vorsprungshöhe auf Basis von JIS B 0601:2001 unter Verwendung eines Kontaktoberflächen-Rauheitsanalysators bestimmt wird.

12. Laminatfolie nach einem der Ansprüche 6 bis 9, wobei in zumindest dem ersten oder zweiten Film die Fläche A eine maximale Vorsprungshöhe Rp von 5 nm oder mehr unter 50 nm aufweist, wobei die Fläche A eine Trennfläche ist, die mit einem Trennmittel auf Basis von langkettigem Alkyl behandelt ist,
wobei die maximale Vorsprungshöhe auf Basis von JIS B 0601:2001 unter Verwendung eines Kontaktoberflächen-Rauheitsanalysators bestimmt wird.

13. Laminatfolie nach einem der Ansprüche 6 bis 10, wobei zumindest in dem ersten oder zweiten Film die Fläche A eine Trennfläche ist, die mit einem Trennmittel auf Silikonbasis behandelt ist, und die Trennfläche eine Resthaftungsrate

von 60 % oder mehr aufweist.

**14.** Laminatfolie nach einem der Ansprüche 1 bis 13, wobei die druckempfindliche Haftmittelschicht mit einem druckempfindlichen Acrylathaftmittel gebildet ist.

**15.** Verwendung der Laminatfolie nach einem der Ansprüche 1 bis 14 in der Herstellung eines optischen Elements mit der druckempfindlichen Haftmittelschicht.

## Revendications

**1.** Feuille stratifiée comprenant une couche d'adhésif sensible à la pression, un premier film stratifié sur une première face de la couche d'adhésif sensible à la pression et un second film stratifié sur une seconde face de la couche d'adhésif sensible à la pression, dans laquelle

le premier film est un film de libération ayant une face A en contact avec la couche d'adhésif sensible à la pression, avec la face A qui est une face de libération,
la face A du premier film a une hauteur de saillie maximale $Rp_{1A}$ de moins de 50 nm,
les premier et second films ont une épaisseur combinée $T_{SUM}$ de 80 μm ou supérieure, et
l'épaisseur de la couche d'adhésif sensible à la pression est de 20 μm ou supérieure et 200 μm ou moins,
dans laquelle la hauteur de saillie maximale est déterminée en fonction de JIS B 0601:2001, en utilisant un analyseur de rugosité de surface de contact.

**2.** Feuille stratifiée selon la revendication 1, dans laquelle la couche d'adhésif sensible à la pression est formée à partir d'une composition d'adhésif sensible à la pression durcissable par rayon d'énergie active.

**3.** Feuille stratifiée selon la revendication 1 ou 2, dans laquelle au moins un entre les premier et second films a une épaisseur T (mm) et un module élastique E' (MPa) satisfaisant la formule suivante 0,10 (N-mm) < E' x $T^3$,
dans laquelle le module élastique est déterminé dans une plage de température de 0 °C à 100 °C, en utilisant un viscoélastomètre dynamique dans un mode de tension, à une distance de mandrin de 23 mm à un taux de chauffage de 10 °C/min à une fréquence de 1 Hz à 0,05 % de déformation.

**4.** Feuille stratifiée selon l'une quelconque des revendications 1 à 3, dans laquelle au moins un des premier et second films a une épaisseur de 25 μm ou supérieure.

**5.** Feuille stratifiée selon l'une quelconque des revendications 1 à 4, dans laquelle la face A du premier film a une résistance de pelage au cisaillement Fsi de 0,5 N/4cm$^2$ ou supérieure et 250 N/4cm$^2$ ou moins par rapport à la première face de la couche d'adhésif sensible à la pression,
dans laquelle la résistance de pelage au cisaillement est déterminée en utilisant un testeur de traction à un angle de pelage de 0° et une vitesse de traction de 10 mm/min.

**6.** Feuille stratifiée selon l'une quelconque des revendications 1 à 5, dans laquelle le second film a une face A en contact avec la couche d'adhésif sensible à la pression, la face A ayant une hauteur de saillie maximale $Rp_{2A}$ de moins de 50 nm,
dans laquelle la hauteur de saillie maximale est déterminée en fonction de JIS B 0601:2001, en utilisant un analyseur de rugosité de surface de contact.

**7.** Feuille stratifiée selon la revendication 6, dans laquelle le second film est un film de libération dont la face A est une face de libération.

**8.** Feuille stratifiée selon la revendication 7, dans laquelle la face A du second film a une résistance de pelage au cisaillement $F_{S2}$ de 0,5 N/4cm$^2$ ou supérieure et 250 N/4cm$^2$ ou moins par rapport à la seconde face de la couche d'adhésif sensible à la pression,
dans laquelle la résistance de pelage au cisaillement est déterminée en utilisant un testeur de traction à un angle de pelage de 0° et une vitesse de traction de 10 mm/min.

**9.** Feuille stratifiée selon la revendication 7 ou 8, dans laquelle la résistance de pelage au cisaillement Fsi (N/4cm$^2$) de la face A du premier film par rapport à la première face de la couche d'adhésif sensible à la pression et la résistance de

pelage au cisaillement $F_{S2}$ (N/4cm$^2$) de la face A du second film par rapport à la seconde face de la couche d'adhésif sensible à la pression ont une relation qui satisfait la formule suivante $0,1 \leq (F_{S2} - F_{S1})/F_{S2}$.

**10.** Feuille stratifiée selon l'une quelconque des revendications 6 à 9, dans laquelle, dans au moins le premier ou second film, la face A a une hauteur de saillie maximale Rp de 20 nm ou supérieure en dessous de 50 nm avec la face A qui est une face de libération traitée avec un agent de libération à base de silicone,
dans laquelle la hauteur de saillie maximale est déterminée en fonction de JIS B 0601:2001, en utilisant un analyseur de rugosité de surface de contact.

**11.** Feuille stratifiée selon l'une quelconque des revendications 6 à 9, dans laquelle, dans au moins le premier ou second film, la face A a une hauteur de saillie maximale Rp de 20 nm ou supérieure en dessous de 50 nm avec la face A qui est une face de libération traitée avec un agent de libération à base d'alkyle à chaîne longue,
dans laquelle la hauteur de saillie maximale est déterminée en fonction de JIS B 0601:2001, en utilisant un analyseur de rugosité de surface de contact.

**12.** Feuille stratifiée selon l'une quelconque des revendications 6 à 9, dans laquelle, dans au moins le premier ou second film, la face A a une hauteur de saillie maximale Rp de 5 nm ou supérieure en dessous de 50 nm avec la face A qui est une face de libération traitée avec un agent de libération à base d'alkyle à chaîne longue,
dans laquelle la hauteur de saillie maximale est déterminée en fonction de JIS B 0601:2001, en utilisant un analyseur de rugosité de surface de contact.

**13.** Feuille stratifiée selon l'une quelconque des revendications 6 à 10, dans laquelle, dans au moins le premier ou second film, la face A est une face de libération traitée avec un agent de libération à base de silicone et la face de libération a un taux d'adhésion retenue de 60 % ou supérieure.

**14.** Feuille stratifiée selon l'une quelconque des revendications 1 à 13, dans laquelle la couche d'adhésif sensible à la pression est formée d'un adhésif acrylique sensible à la pression.

**15.** Utilisation de la feuille stratifiée selon l'une quelconque des revendications 1 à 14 dans la production d'un élément optique ayant la couche d'adhésif sensible à la pression.

[Fig. 1]

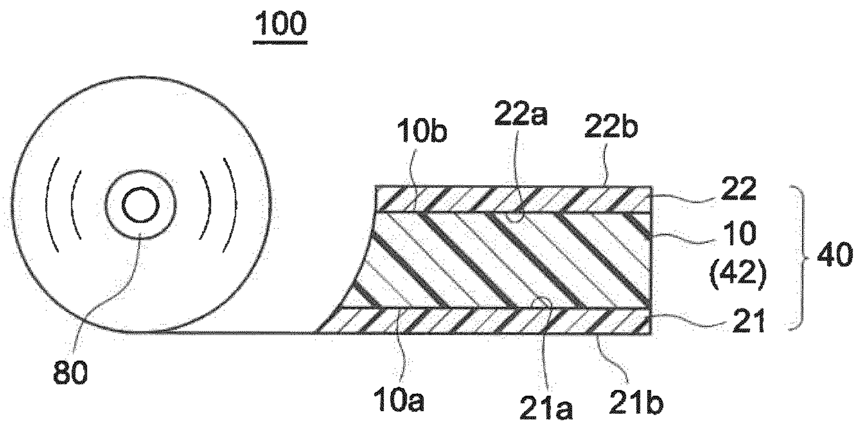
100
10b
22a
22b
22
10
(42)
40
21
80
10a
21a
21b

[Fig. 2]

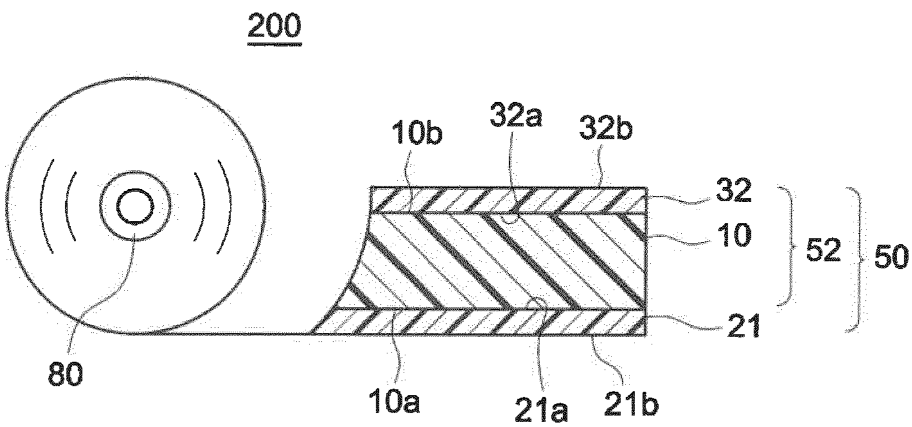
200
10b
32a
32b
32
10
52
50
21
80
10a
21a
21b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6300788 B
- EP 2100933 A1
- JP 2016145341 A
- JP 2007051271 A


### Non-patent literature cited in the description


- **C. A. DAHLQUIST**. Adhesion : Fundamental and Practice. McLaren & Sons, 1966, 143
- Polymer Handbook. John Wiley & Sons, Inc., 1989